# EUROPEAN PATENT APPLICATION

(11) **EP 4 524 302 A1**
(43) Date of publication of application: **19.03.2025**
(21) Application number: 23197010.4
(22) Date of filing: 12.09.2023
(51) Int. Cl.: D01D 5/253, D01F 1/10, D01F 6/46, E01C 13/08

(54) **ARTIFICIAL TURF WITH TRACTION CONTROL AGENT**

(71) Applicant: Polytex Sportbeläge Produktions-GmbH, 47929 Grefrath (DE)
(72) Inventor: SICK, Stephan, 76532 Baden-Baden (DE); VAN DEN BERG, Thorsten, 45145 Essen (DE); HAMANN, Sven, 45472 Mühlheim (DE); GROCHLA, Dario, 44869 Bochum (DE)
(74) Representative: Richardt Patentanwälte PartG mbB

(57) **Abstract**

An artificial turf fiber comprising a polymer material and a traction control agent disposed within the polymer, wherein the traction control agent (404) is a grafted polymer (404) comprising a slip agent (302) grafted on a backbone (304) of the grafted polymer (404).

## Description

### Field of the invention

The invention relates generally to an artificial turf fiber and, more particularly, to an artificial turf fiber with a traction control agent, to an artificial turf using said artificial turf fiber, and a method of making said artificial turf fiber.

### Background

Artificial turf use for the surface of sport fields such as soccer, football, rugby etc. is increasing rather rapidly due to the convenience and economic efficiency of maintenance compared to natural turf. Existing artificial turfs used in such sport fields, especially socker fields, require a smooth surface that provides adequate grip to prevent a player from slipping but not too much grip where the shoe of the player can be caught and cause foot injury to the player. In soccer fields using artificial turf foot it is not uncommon to report foot injuries, especially of the lower foot and the ankle. This is because, the fibers of the artificial turf may sometimes adhere to the shoes of the players and lead to ankle injuries. Hence, there is a need of more advanced artificial turf which can overcome these drawbacks of heretofore known turfs that can be particularly suitable for reducing ankle injuries when used as a playing surface for fields of sports like soccer.

Lubricants in the artificial turf industry have been used extensively, but their use has been limited primarily during the processing steps for making the artificial turf fibers or in the backing and infill materials of the artificial turf. Also, the use of reflective pigments for keeping artificial turfs cool has been reported in the literature. See, for example, US20170233956A1, and EP3936665A1 describing artificial turf infill compositions using lubricants and reflective pigments.

Various attempts have been made to produce artificial turf that looks natural and at the same time does not change its performance characteristics in different weather conditions. For example, US20220025587A1 describes an artificial turf which is said to have an improved, natural grass look and feel. The '587 patent application describes making a turf fiber having a composite structure of a core made of a first polymer and a shell made of a second polymer. The shell is said to be made of an acrylic polymer. The '587 patent application describes the use of stearic fatty acid as an emulsifying agent used in the processing of the first polymer for the core of the turf fiber.

US9309630B2 describes an artificial turf for sports which allegedly changes little with varying moisture and temperature changes during play. The '630 patent employs a sheet of non-woven fibers which are held together by being entangled to one another. It is described in the '630 patent that the free ends of some fibers as well as loops of some of the fibers may extend above the sheet.

US8691906B2 describes a process for producing at least one monofilament from a thermoplastic polymer material comprising at least one polyester material and also nanoparticles and optionally further additives including lubricants. The process comprises adding the components to an extruder as partial or complete mixtures or separately and the thermoplastic polymer material being initially strand extruded cooled and stretched and finally heat-conditioned at a temperature in the range from 40 to 120° C. for 0.01 to 10 min. The '906 patent describes that nanoparticles can be coupled with UV stabilizers and lubricants, when they are highly branched polyesters and/or polycarbonates.

Japanese patent application JPH09268514A relates to a yarn to be used for artificial turf and teaches to add a silicone graft polymer in order to improve resistance to permanent set and to improve mechanical strength. However, this application has nothing to do with improving the composition of process additives used for the manufacturing of artificial turf. Furthermore, JPH09268514A teaches to use a very high amount of the silicone graft polymer, namely 0.5 to 30 parts by weight, preferably 1 to 15 parts by weight, which have been observed to result in undesired properties of the fibers, in particular a slippery fiber surface and an increased tendency to delaminate. EP 3 137 682B1 describes the use of nucleating agent for increasing the surface roughness of artificial turf fibers for more firmly integrating the fibers into the backing.

Despite the above rather limited attempts to produce artificial turf that can perform equally well in hot or wet weather and maintain its characteristics over a long period of time, there exists great concern about the impact of artificial turf on foot injuries and primarily ankle sprains and knee injuries. Recent studies that the biggest differences in injuries between artificial turf and natural turf surfaces are in ankle injuries with more injuries observed with artificial turf surfaces. Thus, further improvements are needed for providing an artificial turf that significantly reduces the risk of injuries, especially ankle injuries for soccer, American football, and similar intensity sports.

### Summary of the Invention

The present invention overcomes the aforementioned limitations of existing artificial turfs.

An objective of the present invention is to provide an artificial turf fiber and an artificial turf particularly suitable for the playing surface of sports like soccer and for reducing significantly the risk of foot injuries, and especially ankle injuries.

Another objective of the present invention is the provision of an artificial turf having a surface that stays smooth, and maintains its characteristics for the entire useful life of the artificial turf.

Another objective of the present invention is to provide an artificial turf that stays cooler at hot weather conditions.

Another objective of the present invention is to provide an artificial turf with enhanced tribological properties and traction. The fiber surface of the present invention exhibits similar tribological and/or mechanical properties whether or not it is wet or dry.

Another objective of the present invention is to provide an artificial turf having a surface that the shoes of players, e.g. soccer players, adhere less strongly to the surface of the fibers, so that the risk of injury, for example, when a player changes direction quickly, is avoided.

Another objective of the present invention is to provide an artificial turf that is water repellant and retains its performance characteristics regardless of whether it is wet (e.g., after a rain shower) or dry, especially in very hot, sunny weather.

The solution provided by the present invention to the aforementioned objectives is an artificial turf fiber, an artificial turf, and a method of manufacturing the artificial turf fiber as specified in the independent claims. Embodiments are given in the dependent claims. Embodiments and examples disclosed herein can freely be combined with each other if they are not mutually exclusive.

According to a first aspect of the invention there is provided an artificial turf fiber comprising:
a base polymer forming, and
a traction control agent incorporated/contained in the base polymer,
wherein the traction control agent is a grafted polymer comprising a slip agent polymer grafted on a backbone polymer of the grafted polymer,
wherein the traction control agent is present in an amount effective to reduce the friction coefficient of the artificial turf by at least 5%, preferably from 5 % to 25%, more preferably from 7% to 20 % compared to the friction coefficient of the artificial turf without the traction control agent.

The base polymer may form a continuous matrix. The traction control agent may form island regions within the continuous matrix of the base polymer.

Grafting the slip agent polymer on a backbone polymer reduces its rate of migration within the base polymer so that it can last longer providing effective lubrication of the artificial turf fiber. In a preferred embodiment the backbone polymer is matched with the base polymer or a main part of the base polymer. Using the same type backbone polymer as the base polymer or a main part of the base polymer minimizes and essentially eliminates any migration of the grafted polymer within the fiber. It is noted that "same type polymer" as this term is used here means polymer of the same chemical composition but not necessarily of the same molecular weight. Hence, for example, the base polymer may be homopolymer polyethylene and the backbone of the traction control agent may be also homopolymer polyethylene albeit of different molecular weight. However, this term "same type polymer" does not exclude the case wherein the backbone has also the same molecular weight as the base polymer. Thus, the grafted polymer with the slip agent polymer remains well dispersed within the fiber for a long time, effectively for the useful life of the fiber. As a result an artificial turf fiber with permanent lubrication and substantially constant coefficient of friction is made. Hence, according to an aspect of the invention, the traction control agent stays within the fiber for the useful life of the fiber and, allows controlling the friction coefficient of the artificial turf fiber within a desired predetermined range in both wet and dry conditions, thus providing a desirable traction that prevents excessive slippage of the players on the artificial turf surface in rain/wet conditions or tripping hazards in dry sunny conditions. For example, the traction control agent may stay within the base polymer for at least one year, preferably for at least 2 years, more preferably for at least 5 years, and most preferably for at least 10 years

The traction control agent may be a grafted polymer with a slip agent polymer grafted on a backbone polymer. Preferably, the traction control agent may be a siloxane grafted polymer, i.e., a polymer comprising a backbone of a polymer material and siloxane grafted onto the polymer backbone. The siloxane may be chemically attached via covalent bonding onto the polymer backbone in an effective amount for controlling a friction coefficient of the turf within a desired range for achieving the desired traction for the turf. Unlike the present invention, free siloxanes or other free slip agents often used in turf fiber formulations may generally migrate to the surface and leave the turf over a relative short period of time making the turf surface either too slippery (in the beginning when too much slip agent migrates to the surface) or too sticky (when the slip agent is depleted).

The presence of the siloxane grafted on to the polymer fiber backbone modifies the fiber characteristics, i.e., makes the fiber smoother, and reduces its friction coefficient, thus, it reduces the tribological interaction between the fiber and the turf user. Use of the traction control agent provides an improved fiber that feels smoother to the user, provides better traction control which can be customized to the needs of the particular field and may also prevent or reduce fiber wearing out from friction and abrasion.

The amount of siloxane grafted on the polymer backbone as weight percentage of the grafted polymer (i.e., the polymer backbone plus the siloxane) may vary depending on the particular fiber formulation. For example, the amount of siloxane grafted on the polymer backbone as weight percentage of the grafted polymer may preferably range from 5.0 to 50 wt %, and more preferably 7.0 to 40 wt %.

In a preferred embodiment the grafted polymer is a siloxane grafted polyolefin and the base polymer or a main part of the base polymer is also a polyolefin, preferably the same type polyolefin as the polyolefin used for the backbone polymer. The polyolefin may preferably be homopolymer, or random copolymer polyolefin, more preferably polyethylene or polypropylene. For example, polyethylene grafted with siloxane refers to a composite material where siloxane chains are chemically attached or "grafted" onto a polyethylene backbone. This grafting process may involve covalently bonding the siloxane molecules to the polyethylene polymer chain.

By grafting siloxane onto the polyethylene backbone, the resulting material can be used as slow migration or no migration traction control agent by dispersing it within the base polymer. The siloxane polymer grafted on the polyethylene backbone polymer besides reducing the friction in the fiber also improves the water repellency characteristic of the fiber. The siloxane grafted polyethylene may also prevent clogging or fouling in the extrusion process for making the fiber.

The siloxane grafted polyolefins (i.e., polyolefin backbone grafted with siloxane side chains) allow for a good compromise with regard to the smoothness and slipperiness of artificial turf fibers. The siloxane grafted polyolefin allows manufacturing artificial turf fibers which are smooth enough as to prevent skin burns when a player slips and slides along the turf. At the same time, they are not too slippery (which is undesirable as this would cause the players to slip) because the grafting process generates large molecules with polyolefin-like properties which are immobile.

A further advantage may be that the polyolefin grafted with siloxanes can also improve the extrusion process for making the artificial turf fiber because it increases the lubricity and reduces the surface adhesiveness of the extruded polymer mass which in turn can prevent clogging of the extrusion nozzles.

The use of the polyolefin grafted with siloxanes as a traction control agent has a further advantage in that they do not contain halogen compounds and are physiologically harmless. This is particularly advantageous, since the fibers come into skin contact with players. In some cases, artificial turf surfaces are also installed in private gardens and children's playgrounds, so the health safety of the fibers is particularly important here.

A further advantage may be that the polyolefin grafted with the siloxanes are highly effective and thermally stable and hence are better suited for extrusion processes than, for example, fatty acids which would at least partially degrade due to the high temperatures during extrusion.

A further advantage may be that the polyolefin backbone and its size can ensure that the traction control agent has polyolefin-like properties, making traction control agent easier to disperse within the polymer mass and also easier to maintain in a homogeneous dispersed state.

The polyolefin grafted with one or more siloxanes mixes well into the base polymer and integrates into the solidified fiber polymer mass. Due to the improved compatibility the polyolefin grafted with the one or more siloxanes does not separate from the base polymer mass. Compared to current lubricating agents, the siloxane grafted polyolefin is immobile or substantively immobile and does not migrate out of the base polymer mass. Thus, the smoothness and friction coefficient characteristics of the turf fiber may remain constant for the useful life of the fiber.

In some embodiments the base polymer is preferably selected from the group consisting of polyolefins and/or polyamides, more preferably polyolefin homopolymers, polyolefin random copolymers, even more preferably polyethylene homopolymer, polyethylene alloy, and polyethylene copolymer.

Polyethylene alloy refers to a material that is a blend or combination of different types of polyethylene. For example, a polyethylene alloy may involve combining high-density polyethylene (HDPE) with linear low-density polyethylene (LLDPE) to achieve a balance between strength and flexibility. The traction control agent and optionally additives like fillers, reinforcements, or compatibilizers may be incorporated into the blend provide the right fiber properties including excellent foot traction, preferably for the useful life of the turf.

In some embodiments the base polymer comprises low density polyethylene (LDPE), LLDPE, and/or HDPE and mixtures thereof. The LDPE may have a density from 0.905 g/cm³ to 0.920 g/ cm³, the LLDPE may have a density from 0.914 g/cm³ to 0.928 g/cm³, and the HDPE may have a density from 0.92 to 0.98 g/cm³.

In some embodiments, the base polymer is a mixture of low-density polyethylene (LDPE) and linear low-density polyethylene (LLDPE).In some embodiments, the polymer backbone for the fiber is high density polyethylene (HDPE). In some embodiments, the base polymer is a mixture of LDPE and HDPE wherein the LLDPE is preferably from 10 to 70 wt% of the polymer material, more preferably from 15 to 50% wt%, and more preferably from 25 to 45 % of the total amount of LDPE and HDPE. In some embodiments, the base polymer is a mixture of LDPE and LLDPE wherein the LLDPE is preferably from 10 to 70 wt% of the polymer material, more preferably from 15 to 50% wt%, and more preferably from 25 to 45 % of the total amount of LDPE and LLDPE. In some embodiments, the LLDPE may be a random copolymer of polyethylene with at least one of butene, hexene, and octene.

In a preferred embodiment, the base polymer is a mixture of LLDPE and HDPE, with the LLDPE being hexene or octene comonomer based and having a density from 0.916 and 0.920 g/cm³, while the HDPE has a density of 0.952 to 0.957 g/cm³ and is in an amount of from 5-18 wt% of the holistic polymer mixture, and more preferably about 15 wt%.

In an embodiment, artificial turf fiber comprises a siloxane grafted polyethylene and a base polymer, the base polymer comprising:
LLDPE-C6: 80 - 84 wt%, in particular 81.75 wt%, with at least 85 wt% of the LLDPE-C6 being biobased,
HDPE: 8.0 -12.0 wt%, in particular 10.0 wt%, with at least 90 wt% of the HDPE being biobased,
masterbatch 6 -10 wt%, in particular 8 wt%,
process aid 0.1 - 0.5 wt%, in particular 0.25 wt%,
wherein the siloxane grafted polymer is present in an amount of from 0.01 wt% to 0.25 wt%, preferably in an amount of from 0.01 wt% to 0.2 wt% based on the total weight of the fiber. The polymer backbone may be a polyolefin.

In some embodiments, the amount of the siloxane in the siloxane grafted polymer as weight percentage of the weight of the siloxane grafted polymer may range from 1 wt% to 50 wt%, or 5 wt% to 40 wt%, or 10 wt% to 30 wt%.

The masterbatch may include color pigments and a UV stabilizer. The melt flow rate of the LLDPE-C6 and of the HDPE may vary. The LLDPE-C6 and the HDPE may have a density of from 0.915 to 0.940 g/10 min and from 0.940 to 0.970 g/10 min, respectively.

The master batch may include color pigments with a polyethylene based carrier and a UV stabilizer, for example, a UV stabilizer comprising 1, 6 hexane diamine, octadecyl-3-(3,5-di-tert.butyl-4-hydroxyphenyl)-propionate, and pentaerythritol tetrakis(3-(3,5-di-ter-butyl-4-hydroxyphenyl)propionate). Other suitable UV stabilizers may also be used as disclosed in EP 3762451 to Sick et al. entitled "artificial turf fiber with UV protection substances.

Siloxanes are also known as silicones. Their chemical structure determines a range of physicochemical properties, including toxicity/safety with respect to human health. In general, the safety of application decreases with the decrease in silicone particle size. This is because low molecular siloxanes demonstrate a lipophilic character which increases their ability to overcome biological membranes and skin barriers.

According to the claimed invention, because the siloxanes are grafted on the polyolefin backbone, the molecular weight of the siloxanes can be increased as may be needed for reducing the friction coefficient of the turf while the risk of the siloxane been released to the environment is decreased. According to some embodiments, the polyolefin is polyethylene or polypropylene or polyamide.

According to some embodiments, the artificial turf fiber comprises or basically consists of a base polymer, whereby a main part, e.g., at least 50%, in particular at least 60%, in particular at least 70% by weight of the base polymer, consists of a polyolefin such as polypropylene or polyethylene or polyamide. Preferably, the backbone of the grafted polymer is the same type as the polymer that makes up the main part of the base polymer. This is advantageous because artificial turf fibers are often made of polyethylene or polypropylene or polyamide or a polymer blend with two or more of these polymer types. By grafting the siloxanes onto a polyethylene molecule, the entire molecule acquires a chemical similarity to the properties of polyethylene. This means that the polyethylene grafted with the siloxanes can be particularly well and homogeneously mixed with a polymer mass mainly consisting of polyethylene. Likewise, polypropylene grafted with one or more siloxanes can be homogeneously and stably mixed with a polymer mass mainly consisting of polypropylene. This may be advantageous because an inhomogeneous distribution and/or a subsequent phase separation of the traction control agent and the base polymer mass can lead to processing problems in the extraction nozzles becoming completely or partially clogged, fine structures of the fiber profile disappearing or being distorted, or the fiber breaking off during the extraction process. Moreover, the applicant has observed that highly similar chemical properties of the olefin used for synthesizing the olefin grafted with the siloxanes and the polymer being the main part of the base polymer may help to ensure that the polyolefin grafted with the siloxanes does not migrate to the surface of the fibers during the extrusion process. This may ensure that the fiber surface does not become too slippery and is still rough enough to allow for a firm integration in an artificial turf backing.

The applicant has rather unexpectedly discovered that employing siloxane grafted polyethylene in the described amounts provide an artificial turf fiber which has highly desirable properties both in respect to the extrusion process (no clogging, no distortion of the fiber profile, no tearing apart of the fibers), in respect to the turf playing characteristics, (e.g., smoothness, friction coefficient), and, also in respect to the fibers robustness and resistance to wear, tear and delamination. Importantly, the fibers may have a smooth but not too slippery surface. The above mentioned amount ranges provide a very good compromise with regard to the smoothness and slipperiness resulting in fibers which are smooth enough as to prevent skin burns when a player slips and slides along the turf. At the same time, they are not too slippery, as this would cause the players to slip.

According to embodiments, at least 0.01 % by weight of the artificial turf fiber, and in particular 0.01 % to 0.25 % by weight of the artificial turf fiber, in particular 0.01 % to 0.09 % by weight of the artificial turf fiber, in particular 0.01 % to 0.08 % by weight of the artificial turf fiber, in particular 0.01 % to 0.07 % by weight of the artificial turf fiber, in particular 0.01 % to 0.06 % by weight of the artificial turf fiber, in particular 0.01 % to 0.05 % by weight of the artificial turf fiber, and in particular 0.02-0.03 % by weight of the artificial turf fiber, consists of the polymer grafted with the one or more siloxanes.

According to embodiments, not more than 0.25 % by weight of the artificial turf fiber consists of the polymer grafted with the one or more siloxanes.

Applicant has surprisingly observed that an amount of the siloxane of not more than 0.25 % by weight of the artificial turf fiber, or in some cases not more than 0.05% by weight of the fiber is sufficient for ensuring very good playing characteristics which have been observed to deteriorate if the amount of the additive is increased to significantly more than 0.25 wt% of the resulting fibers. This is because limiting the amount of the siloxane in the polymer fiber to the 0.25% threshold may ensure that the fiber surface is smooth enough to prevent skin burns but is still rough enough to prevent the players slip and fall. Furthermore, this amount threshold ensures that the surface roughness of the artificial turf fiber is still high enough to allow a firm integration of the fiber into a carrier via a secondary backing. In some embodiments, the artificial fiber is integrated in a carrier (e.g. by tufting, weaving, etc.), and then a liquid secondary backing, e.g. a liquid polyurethane mass or a liquid latex mass is applied on at least one side of the carrier, thereby contacting and wetting at least some portions of the integrated fibers. When the liquid secondary backing solidifies, the artificial turf fibers are firmly integrated in the backing. If the amount of the polyolefin grafted with the one or more siloxanes would be too high, the surface roughness of the resulting fibers would be too low and the fibers could be pulled out of the backing as a consequence of wear and tear.

According to embodiments, the siloxanes are organo-modified siloxanes (OMS), also known as organosiloxanes or organofunctional siloxanes created by attaching organic groups such as alkyl, aryl, or functional groups to the siloxane backbone. Preferred examples of suitable OMS include polydimethylsiloxane (PDMS), and methylphenylsiloxane.

Using a polymer grafted with one or more siloxanes which are solid or waxy at room temperature may have the advantage that the consistency is similar to the consistency of the typical artificial turf fiber material at room temperature. Moreover, the basically solid or waxy state will prevent the grafted polymer from migrating to the surface of the fiber and leaving the fiber.

According to some examples, a commercially available polymer grafted with one or more siloxanes is used, e.g., an organo-modified siloxane (OMS) on a polyethylene carrier such as Tegomer ^{®} 6810.

According to some examples, carbinol functionalized polydimethylsiloxane (PDMS) are used as the siloxanes to be grafted on a polyolefin or polyamide backbone.

An example of an organo-modified polydimethylsiloxane that can be used for grafting this siloxane on a polyolefin or polyamide has the CAS-Nr.: 68937-54-2. This CAS-number refers to a methylsiloxane-dimethylsiloxane copolymer available e.g. as "Silquest^{™} PA-1 organosilicon".

According to embodiments, the siloxanes are polydimethylsiloxane (PDMS), in particular PDMS having more than 40 repeating monomer [Si(CH3)2O] units, in particular PDMS having more than 50 repeating monomer [Si(CH3)2O] units, in particular having 50 to 80 repeating monomer [Si(CH3)2O] units. It has been observed that these siloxanes, when grafted on a polymer, provide for particularly effective process aid with a very low tendency to migrate out of the fiber and/or to cause delamination.

According to some embodiments, the molecular weight of the siloxane (siloxane chain already grafted to or to be used to be grafted to the polymer chain) has a molecular weight of more than 3000 Dalton, in particular 4000 to 6000 Dalton.

The molecular weight and the number of repeating monomer units can be determined using exclusion chromatography with an evaporative light scattering detector (SEC-ELSD) as described in "Size exclusion chromatography with evaporative light scattering detection as a method for speciation analysis of polydimethylsiloxanes. III. Identification and determination of dimeticone and simeticone in pharmaceutical formulations", Krystyna Mojsiewicz-Pienkowska, Journal of Pharmaceutical and Biomedical Analysis 58 (2012) 200-207*.*

This may have the advantage that siloxanes of this molecular weight range have a low viscosity, which allows for a good reduction of friction during the extrusion process. Siloxane groups having significantly larger molecular weights will lead to compatibility problems with the polymer (e.g., PE) to be used as the backbone for the grafting process.

According to embodiments, the polymer grafted with one or more siloxanes has a molecular weight of more than 500 Dalton, in particular of more than 10.000 Dalton, and preferably of more than 100.000 Dalton, in particular at least 500.000 Dalton.

The molecular weight of the polymer grafted with one or more siloxanes is measured via the melt flow rate in accordance with standard ASTM D1238.

According to embodiments, the polyolefin backbone of the grafted polyolefin with one or more siloxanes has a molecular weight of more than 2,000 (2k) Dalton. In some embodiments, at least 50% of the molecules of the polyolefin grafted with one or more siloxanes have a molecular weight of at least 2,000 Dalton. According to some embodiments, at least 50% of the polyolefin grafted with one or more siloxanes have a molecular weight of at least 10,000 Dalton. According to some embodiments, at least 50% of the polyolefin grafted with one or more siloxanes have a molecular weight of at least 100,000 Dalton, in particular at least 500,000 Dalton. According to some embodiments, at least 50% of the polyolefin grafted with one or more siloxanes have a molecular weight of at least 2,000 Dalton, or at least 100,000 Dalton, or at least 500,000 Dalton, or at last 2,000 Dalton but less than 1,000,000 Dalton, or at least 100,000 Dalton and less than 1,000,000 Dalton, or at least 500,000 Dalton and less than 1,000,000 Dalton. According to some embodiments, at least 90% of the molecules of the polymer grafted with one or more siloxanes have a molecular weight of the above-specified amount ranges.

Preferably, the polyolefin grafted with the one or more siloxanes may be solid at room temperature or have a consistency of paraffin wax at room temperature, i.e., at a temperature of 20°C. The viscosity may depend on the amount of the siloxanes grafted on to the polyolefin backbone. In some embodiments, in the polymer grafted with one or more siloxanes, the polyolefin/siloxane ratio is chosen such that the polymer grafted with one or more siloxanes may have a solid or wax-consistency at room temperature.

According to embodiments, the acid number (calculated for non-volatile content) of the siloxanes having been grafted onto the polyolefin is about 0.5 mg KOH/g (+/-10%).

According to embodiments, the OH-content (calculated for non-volatile content) of the siloxanes having been grafted onto the polyolefin is about 48 mg KOH/g (+/-10%). Using a polyolefin grafted with one or more siloxanes which are solid or waxy at room temperature may have the advantage that the consistency is similar to the consistency of the typical artificial turf fiber material at room temperature. Moreover, the basically solid or waxy state will prevent the grafted polyolefin from migrating to the surface of the fiber and leaving the fiber.

According to embodiments, the fiber comprises 60-99 % by weight of the fiber an LLDPE polymer and 1-15% by weight of the fiber an LDPE polymer. For example, the fiber may be generated by extruding a base polymer comprising 60-99 % by weight the LLDPE polymer and 1-15% by weight the LDPE polymer.

According to embodiments, the LLDPE polymer has a density in a range of 0.918 g/cm³ to 0.920 g/cm³ and the LDPE polymer has a density in a range of 0.919 g/cm³ to 0.921 g/cm³.

Manufacturing an artificial turf comprising a mixture of LLDPE and LDPE in the above specified amount ranges which also comprises a polyolefin grafted with one or more siloxanes for creating a monofilament in an extrusion and stretching process may be advantageous for multiple reasons.

The term "base polymer" as used herein refers to a polymer or a polymer mixture which may in its simplest case consist of a single polymer which may optionally comprise one or more additives such as pigments or flame retardants. However, a "base polymer" may be a mixture of one or more polymers of different types, e.g., a mixture of polyethylene and polyamide, or a mixture of HDPE and LDPE, which may optionally comprise one or more additives. The polymer mixture may be a single-phase system such as a HDPE and LDPE mixture, or a multi-phase system, such as a liquid PE polymer comprising and embedding beads of an immiscible polyamide (PA) polymer. The polyamide polymer may be, for example, nylon.

The term "Low-density polyethylene" (LDPE) as used herein refers to a thermoplastic made from the monomer ethylene having a density in the range of 0.910-0.940 g/cm³. According to embodiments, the base polymer is or comprises LDPE whose density range is within the above specified sub-range.

The term "Linear low-density polyethylene" (LLDPE) as used herein refers to a substantially linear polymer (polyethylene), with significant numbers of short branches. LLDPE differs structurally from conventional LDPE because of the absence of long chain branching. The linearity of LLDPE results from the different manufacturing processes of LLDPE and LDPE. In general, LLDPE is produced at lower temperatures and pressures by copolymerization of ethylene and alphaolefins.

Preferably, the fiber also includes a reflective agent such as reflective particles, and/or reflective pigments for preventing overheating of the fiber and thus further enhances the performance characteristics of the turf even in hot weather conditions. These reflective particles and pigments have the advantage of reducing the heat on the artificial turf field, thereby further enhancing the performance characteristics of the turf. Suitable reflective agents include titanium dioxide, zinc sulfide (ZnS), tin oxide, aluminum oxide (AlO3), zinc oxide, calcium sulfate, barium sulfate, calcium carbonate, antimony oxide, sodium silicate, aluminum silicate, silica, mica, clay, and the like.

In a preferred embodiment the IR reflective agent is a mixed metal oxide type chosen from the group of the rutile (MeO₂), hematite (Me₂O₃), or spinel (Me₃O₄) type with metals comprising: cobalt, iron, trivalent chrome, tin, antimony, titanium, manganese, and aluminum.

The reflective agent is used in an amount from 0.01 wt% to 8.0 wt%, preferably from 0.3 wt% to 5.0 wt%, more preferably from 0.3 wt% to 3.0 wt% based on the total fiber weight.

Another aspect of the present invention is directed to an artificial turf comprising a plurality of the artificial turf fibers securely attached to a backing material. Preferably, at least a percentage of the plurality of the artificial turf fibers form closed loops extending above a top surface of the backing of the artificial turf. In an embodiment, all of the plurality of the artificial turf fibers may form closed loops extending above the top surface of the backing of the artificial turf. It has been found that the fiber closed loops are particularly suitable for further increasing the smoothness of the turf fibers and are particularly suited for surfaces of fields of sports such as soccer and rugby fields.

In another preferred embodiment, the fibers are texturized which further enhances the ability of the fibers to dissipate heat and improves their overall look and mechanical characteristics such as their overall smoothness.

According to embodiments, the fibers are strongly texturized, thereby increasing the smoothness of the artificial turf surface and making the surface more similar to a wetted artificial turf surface even when water is absent. A "texturized" fiber is a fiber with a shape memory which returns, when released, to a non-straight, e.g., curly, crumpled, folded, and/or twisted shape.

According to embodiments, the artificial turf fibers are integrated into the backing and have a density (number of fibers per artificial turf area) and/or degree of texturization that under a bird's eye perspective, at least 60%, more preferentially at least 70% of the size of the area covered by the artificial turf consists of the fibers and the rest consists of the backing or the infill.

In yet another preferred embodiment, the part of the fibers extending above the backing is wholly or partially texturized. A texturized fiber means that at least a part of the fiber which extends above the backing material instead of being straight it has at least one of a curl or a wave shape. The curls or waves can be produced mechanically or chemically during the manufacturing of the fiber.

The backing of the artificial turf may be made of a thermoset polymer material. The thermoset material may include, for example, a polyurethane resin.

In yet another aspect of the present invention, a method of fabricating the artificial turf is provided, the method comprising,
forming a polymer mixture comprising at least one polymer, a traction control agent, and preferably also reflective particles,
feeding the polymer mixture to an extruder to form a monofilament,
quenching the monofilament,
reheating the monofilament, and
stretching the reheated monofilament to form a monofilament,
then, bundling a plurality of monofilaments to form an artificial turf fiber, and incorporating the artificial turf fiber into a backing to form the artificial turf.

The traction control agent is a polymer grafted with one or more siloxanes. The polymer grafted with the one or more siloxanes may be a polyolefin or a polyamide. In the extruder the mix of the polymer (also referred to as the base polymer) and the traction control agent (i.e., the polymer grafted with one or more siloxanes) may be extruded into a monofilament to provide the artificial turf fiber or may be extruded into a film and cutting the film into slit film strands to provide the artificial turf fiber. For example, the extruded monofilament or one of the slid film strands can be used directly or after post processing steps as the artificial turf fiber.

According to some embodiments, the postprocessing steps comprise:
- quenching the monofilament;
- reheating the monofilament; and
- stretching the reheated monofilament form the monofilament into the artificial turf fiber.

According to some embodiments, the postprocessing steps comprise:
- reheating the slit film strands; and
- stretching the reheated slit film strands into the artificial turf fiber.

According to some embodiments, the base polymer is a mixture of two or more immiscible polymers. A first one of the polymers forms beads surrounded by a second one of the polymers. The extrusion stretches the beads of the first polymer into thread-like regions comprised in the monofilament or an extruded film.

According to some embodiments, the mix of the base polymer and the polymer grafted with one or more siloxanes comprises the polymer grafted with one or more siloxanes in an amount chosen such that not more than 0.25 % by weight of the artificial turf fiber consists of the polymer grafted with the one or more siloxanes.

In some embodiments, incorporating the turf fiber into the carrier includes positioning the fiber so that a first fraction of the fiber is located at the back side of a carrier (also referred to hereinafter as the back fraction of the fiber), a second fraction of the fiber is protruding to the front side of the carrier (also referred to hereinafter as the front fraction of the fiber) and a third fraction of the fiber is inside the carrier (referred to also as the middle fraction of the fiber or the carrier portion of the fiber).

According to a particular preferred embodiment, the backing of the artificial turf incudes a biocide agent (also referred to as antimicrobial agent) which is a zinc-based antimicrobial agent or a metal coordination complex with pyrithione. The use of the biocide agent in the backing of the artificial turf prevents microbial infestation of the turf which in combination with the smoother artificial turf fiber provide a significant improvement over existing artificial turfs for socker fields.

Examples of suitable metal coordination complexes with pyrithione that can serve as antimicrobial agents include zinc pyrithione, manganese pyrithione, copper pyrithione, and sodium pyrithione. Examples of suitable zinc-based antimicrobial agents other than zinc pyrithione include zinc oxide nanoparticles and a zinc-glucose-citrate complex. Particularly preferred is pyrithione zinc (also often referred to commonly as zinc pyrithione).

The pyrithione zinc is used as the antimicrobial agent in an amount of 0.05 wt% to 1.5 wt%, of the polyurethane reaction mixture, and, preferably, in an amount of 0.08 wt% to 0.7 wt % of the polyurethane reaction mixture. More preferably, the zinc pyrithione is used as the antimicrobial agent in an amount of 0.1 wt% to 0.5 wt% of the polyurethane reaction mixture. The use of the pyrithione zinc in the backing of an artificial turf is described in a co-pending United States patent application of the same applicant with application no. 63/345,549 filed on May 25, 2022 with the US patent and trademark office and which is incorporated herein for its disclosure of the use of the biocide agent in a polyurethane backing of an artificial turf.

In a preferred embodiment the fiber used is a texturized monofilament with a texturization degree after 5 min at 90°C of 25-40 %.

In a preferred embodiment the monofilament fiber has after 5 minutes at 90°C a texturization degree of 32 to 37 % and is chosen from a triangle, quadrangle or oval shaped form and a mixture thereof.

According to several embodiments, the artificial turf is infill free.

In further embodiments the artificial turf is either sand dressed or sand filled.

In a further embodiment the artificial turf is filled with an elastomeric material chosen from the group of styrene-butadiene rubber, natural butadiene rubber, thermoplastic elastomer (TPE) like styrenic block copolymers, whereby the infill can preferably comprise a reflective agent, which is based on mixed metal oxides.

Yet another aspect of the present invention is directed to the use of the artificial turf in a soccer field that is according to FIFA standard. Because of the continuous reduction of the fiber friction coefficient of the surface of the artificial turf fibers, the risk of injury of the ankles of the soccer players is significantly reduced.

These and other features and advantages of the present invention will become better understood from the following detailed description of the invention in conjunction with the accompanying drawings.

### Brief Description of the Drawings

In the following, embodiments of the invention are explained in greater detail, by way of example only, making reference to the drawings in which:
Figure 1 is a flowchart of a method of manufacturing an artificial turf;
Figure 2 is a flowchart of a method of manufacturing an artificial turf fiber;
Figure 3 is a simplified schematic illustration of a polyolefin grafted with siloxanes;
Figure 4 is a simplified schematic illustration of a base polymer comprising polyolefin grafted with one or more siloxanes and other additives;
Figure 5 is a simplified schematic illustration of a polymer mixture comprising two polymers, a compatibilizer and a polyolefin grafted with one or more siloxanes;
Figure 6 is a simplified schematic illustration of the process of extruding a polymer monofilament through an extrusion nozzle;
Figure 7 is a simplified schematic illustration of an artificial turf and its manufacturing;
Figure 8 is a simplified schematic illustration of an artificial turf and its manufacturing;
Figure 9 shows a cross-section of a granular polymer mixture 900 comprising LLDPE and HDPE according to one example implementation;
Figure 10 is a simplified block diagram of a system for synthesizing a grafted polyolefin.

### Detailed Description

Like numbered elements in these figures are either equivalent elements or perform the same function. Elements which have been discussed previously will not necessarily be discussed in later figures if the function is equivalent.

The present invention provides an artificial turf fiber comprising a base or matrix polymer forming a base or continuous matrix and a traction control agent incorporated/contained in the polymer material in an amount adequate to reduce the coefficient of friction of the turf fiber and keep it within a desired range for optimum traction between the turf surface and the user's shoes. The traction control agent is a grafted polymer comprising a slip agent polymer, preferably a siloxane, that is grafted on a backbone of an additive polymer.

Additive polymer refers to the polymer that serves as the backbone on which the slip agent, e.g., the siloxane is grafted. The additive polymer and the base polymer may preferably be the same type or the same to allow for better more homogeneous mixing of the traction control agent within the base polymer and as a result within the fiber. The slip agent polymer is added in the fiber in an effective amount designed to provide an effective reduction of the friction coefficient. Also, because the slip agent polymer is grafted on the backbone of the additive polymer it can last reducing the friction coefficient of the fibers preferably for a period of at least 5 years, more preferably at least 10 years, and most preferably at least 15 years.

Although we do not wish to be bound by theory, key factors which are believed to prevent the diffusion of the traction control agent to the surface of the fiber and out of the fiber include the type of the additive polymer, the type of the base polymer, the molecular weights of the base polymer, the additive polymer and the slip agent polymer, the hydrophilicity of the slip agent. Through extensive research and consideration of the above factors, the base polymer material for the fiber, the traction control agent (e.g., the siloxane grafted polyethylene) agent polymer and the additive polymer were selected.

In some specific embodiments the slip agent polymer is a siloxane and is used in an amount of 0.5 wt%, 1.0 wt% and 1.5 wt% based on the total weight of the turf fiber wherein the base polymer that forms the matrix of the fiber and the additive polymer which forms the backbone on which the siloxane chains are grafted may each be a mixture of 10 wt% LDPE and 90 wt% LLDPE of the holistic polymer weight. In yet other embodiments the siloxane is used in an amount of 0.5 wt%, 1.0 wt%, and 1.5 wt% based on the total weight of the turf fiber wherein the base polymer that forms the matrix of the fiber and the additive polymer which forms the backbone on which the siloxane chains are grafted may each be a mixture of 15 wt% HDPE (density of 0.955 g/cm3) and 85 wt% LLDPE (density of 0.920 g/cm3).

In some preferred embodiments, the fiber may also include a reflective agent such as reflective particles, and/or reflective pigments for preventing overheating of the fiber.

An example of a method for manufacturing the artificial turf comprises incorporating the artificial turf fiber into a carrier, and adding a viscous thermoset resin reaction mixture onto a back side of the carrier to form a thermoset resin backing. Various additives may be added in the thermoset reaction mixture including, for example, a biocide agent having antimicrobial, antibacterial and antifungal properties. Once the thermoset resin reaction mixture is placed on the back side of the carrier, hardening of the thermoset reaction mixture is performed to form a solid thermoset resin backing with a portion of the turf fiber which protrudes out of the back side of the carrier being securely embedded inside the solid mass of the thermoset resin backing. The thermoset resin may be any suitable resin. Preferably, the thermoset resin may be a polyurethane resin. In an embodiment, the polyurethane is the reaction product of first and second polyols with an isocyanate, wherein the first polyol is polyether polyol and/or polyester polyol having at least two ("2") hydroxyl groups per molecule, wherein the second polyol is polybutadiene diol, wherein the isocyanate comprises isocyanate monomers, isocyanate polymers or isocyanate prepolymers or a mixture thereof, and wherein the isocyanate monomers, the isocyanate polymers and the isocyanate prepolymers have two or more isocyanate groups per molecule. The polybutadiene diol may be used in an amount of 0.5-10% by weight of a combination of the first polyol and the isocyanate, and may have a number average molecular weight in the range of 500 to 6000 g/mol, more preferably in the range of 1.500 to 4.500 g/mol. The polyurethane reaction mixture may further comprise a surfactant and other additives and fillers. The hardening of the fluid polyurethane mass can be performed, for example, by heating the polyurethane reaction mixture on the back side of the carrier to a temperature of 70-140°C.

The making of the turf fiber includes forming a polymer material mixture inside a first container, preparing an additive mixture including the traction control agent (e.g., the siloxane grafted polyethylene), and preferably also the reflective agent and optionally various other additives for the fiber in a separate or a plurality of separate smaller containers, mixing the polymer material mixture with the additive mixture to form an extrusion feed mixture that is fed to an extruder to form a monofilament (in actuality, typically a plurality of monofilaments). The monofilament exiting from the extruder is quenched, for example, by passing it through a water bath, and upon exiting from the water bath the monofilament is reheated, for example, in an air oven. The reheated monofilament is oriented by stretching the reheated monofilament to form an oriented monofilament which is used as the artificial turf fiber either individually or after being combined with other monofilaments. For example, through a well-known process multiple monofilaments may be combined to form an artificial turf fiber which can be rolled into a yarn. The traction control agent (e.g., the siloxane grafted polyethylene) and preferably also the reflective agent may be added in the additive mixture inside the smaller container. However, this is just an example, and it should be understood that the traction control agent (e.g., the siloxane grafted polyethylene) agent can be added also in the larger container directly with the polymer material mixture or as a separate feed to the extruder feed. The polymer mixture may further comprise a nucleating agent for crystallizing the polymer within and at the surface of the monofilament anti UV agents, anti-flame agents and other optional additives. The artificial turf fiber is typically a bundle of at least 5 monofilaments.

The reflective agent (e.g., reflective particles and/or a reflective pigments) may be used for counteracting the overheating of the turf. These reflective particles and reflective pigment have the advantage of cooling the artificial turf field, thereby preventing change of the turf characteristics due to excessive temperature changes. Also, applicant has found that the type and amount of the reflective agent may affect the effective rate of migration of the traction control agent (e.g., the siloxane grafted polyethylene) agent in the polymer material matrix of the fiber.

The polymer material mixture and the additive mixture including the traction control agent (e.g., the siloxane grafted polyethylene) agent, preferably also the reflective agent may be blended using a blender or mixing device prior to add them to the extruder.

The term "tufting" as used herein refers to a method of incorporating a fiber into an existing carrier. Short U-shaped loops of fibers are introduced through the carrier from one side so that their ends point outside of the carrier in the other direction. Usually, the tuft yarns form a regular array of "dots" on the other side. On the one side of the carrier where the U-shaped loops are located, the tuft fibers may be tied for security, although they need not be. The ends of the tuft yarns can then optionally be frayed or otherwise processed, so that they will subsequently create a dense layer of fibers protruding from the carrier.

The term "weaving" as used herein is a method of incorporating an artificial turf fiber (which can be a monofilament or a bundle of monofilaments) into an existing carrier, whereby the artificial turf fiber and the fiber(s) that built the carrier are interlaced. The interlaced fibers and the mesh form a fabric like or cloth like structure. When an artificial tuft fiber is incorporated by weaving, the fiber interlaces a series of mesh fibers at least three times. Thus, when a fiber is incorporated by weaving rather than tufting, a higher fraction of the artificial turf fiber is interlaced in the carrier material. This may increase the resistance to wear and tear of the artificial turf.

According to embodiments, incorporating the artificial turf fiber into the carrier comprises: tufting the artificial turf fiber into the carrier. According to alternative embodiments, incorporating the artificial turf fiber into the carrier comprises weaving the artificial turf fiber into the carrier.

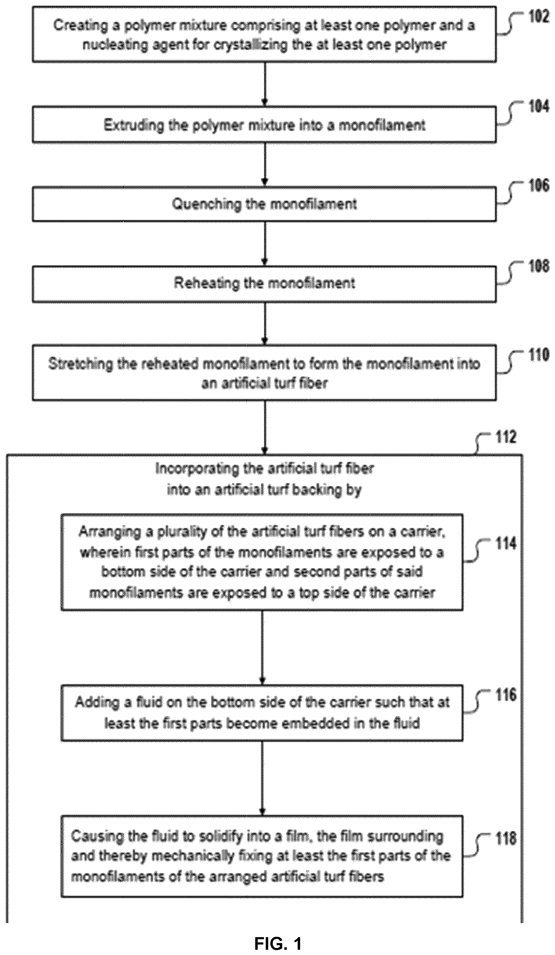

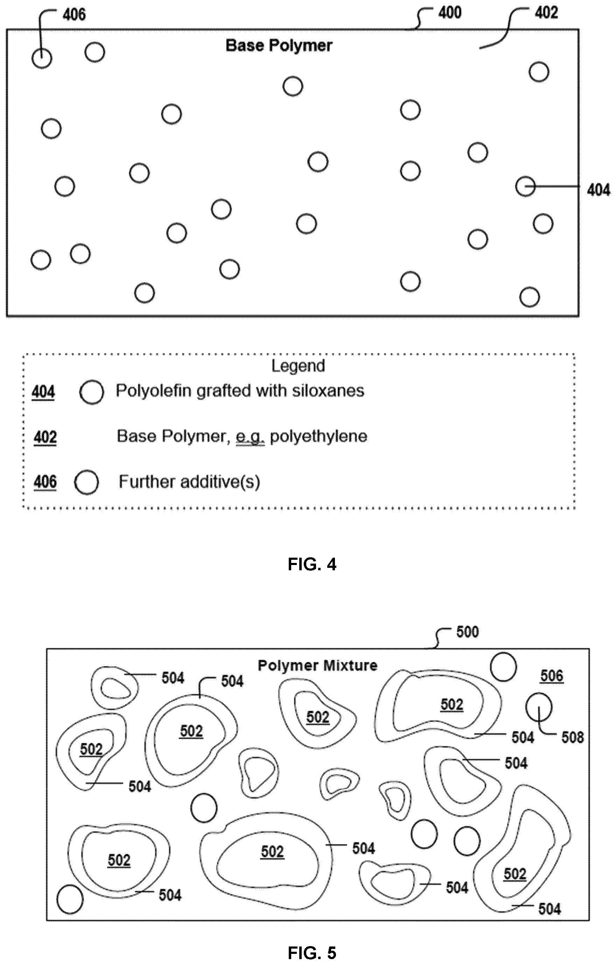

Referring now to figure 1 a flowchart is provided which illustrates an example of a method of manufacturing artificial turf. First in step 102 a polymer mixture such as the mixture 400 depicted in figure 4 is created. The polymer mixture 400 comprises at least one base polymer 402 (also referred to as a matrix polymer), a traction control agent (e.g., the siloxane grafted polyethylene) 404, and preferably a reflective agent 406 (e.g., reflective particles or pigment 406).

The polymer mixture may be created by putting all of the components that make it up together at once. For instance, the at least one base polymer 402, the traction control agent (e.g., the siloxane grafted polyethylene) 404, the reflective agent 408, the optional reflective agent 406 and any other additives (not shown) could be all added together at the same time. The polymer mixture could be thoroughly mixed for instance by using a mixer device. The desired distribution of the components can be achieved by using the proper rate or amount of mixing. The generated mixture could be forwarded to a one-screw feed or a two-screw feed for the extrusion. Additional optional substances may be added.

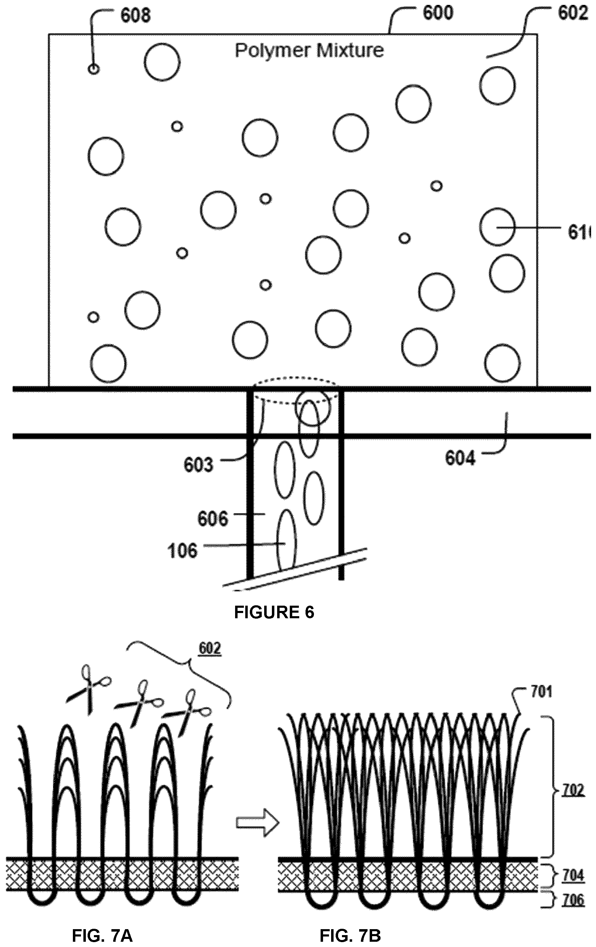

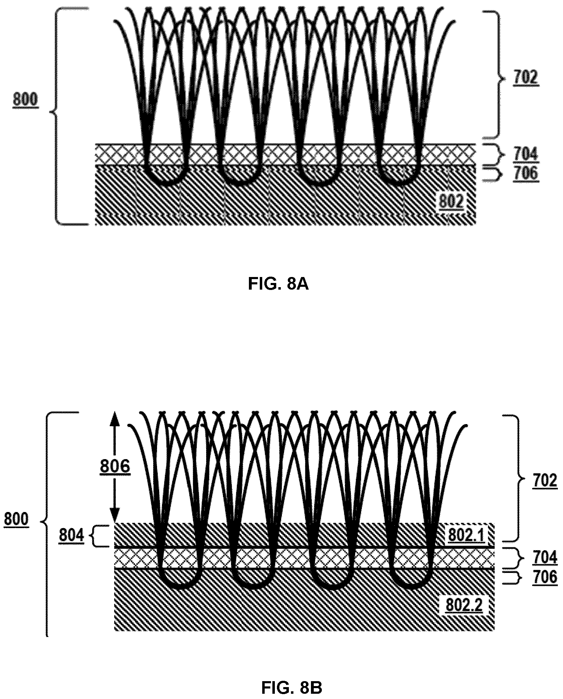

In step 104, the polymer mixture is extruded into a monofilament 506 as illustrated in figure 6. Next in step 106 the monofilament is quenched or rapidly cooled down. In step 108 the monofilament is reheated and in step 110 the reheated monofilament is stretched to form a monofilament that can directly be used as an artificial turf fiber or that can be bundled with additional monofilaments into an artificial turf fiber. Additional steps may also be performed on the monofilament to form the artificial turf fiber. For instance, the monofilament may be spun or woven into a yarn with desired properties. Next in step 112 the artificial turf fiber is incorporated into an artificial turf backing. The incorporation comprises a step 114 of arranging a plurality of the artificial turf fibers on a carrier 704 (see figure 7 and 8). The carrier may be a textile plane, for example. The artificial turf fibers are arranged such that first parts 706 of the monofilaments are exposed to a bottom side of the carrier 704 and second parts 702 of said monofilaments are exposed to a top side of the carrier 704. The arranging could be accomplished by tufting or weaving the artificial turf fiber into the carrier 704, but other methods of arranging the fibers within the carrier 704 are also possible.

Then, in step 116 a resin reaction fluid mixture is added on the bottom side of the carrier such that at least the first parts become embedded in the fluid. Finally, in step 118, the fluid mixture is caused to solidify into a film. The film surrounds and thereby mechanically fixes at least the first parts 706 (and optionally also some portions 804 of the second parts 702 as shown in FIG. 8B) of the monofilaments in the film. The film, i.e., the solidified fluid, constitutes the backing 802.

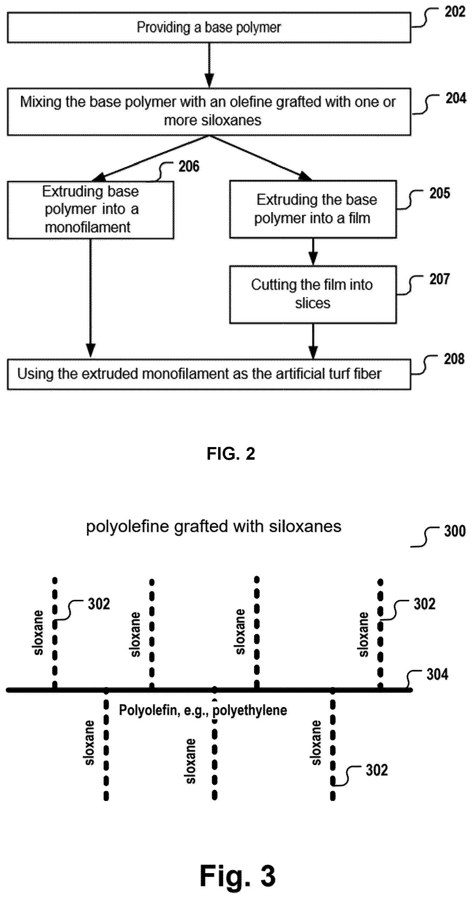

Figure 2 shows a flowchart which illustrates an example of a method of manufacturing an artificial turf fiber. First in step 202 a base polymer is provided. For example, the base polymer can comprise or consist of a molten polymer or polymer mixture. The base polymer may comprise one or more additives such as flame retardants, pigments, UV stabilizers, nucleating agents, dulling agents, antioxidants, or fillers.

Next in step 204, the polyolefin grafted with one or more siloxanes is mixed with the base polymer. For example, the mixing step 202 may be performed in the extruder by homogeneously mixing the polyolefin grafted with one or more siloxanes with the molten base polymer. The mixing may be performed with one or more stirrers. In some implementation variants, it is also possible to add the polyolefin grafted with one or more siloxanes to the base polymer before the base polymer enters the extrusion machine, e.g., when the base polymer still is in solid form. For example, the base polymer may have the form of polymer granules of a single type of polymer or of two or more different types of polymers. Optionally, the base polymer may comprise a polymer granulate fraction referred to as "master batch" which comprises pigments and/or further additives.

In some implementation variants, the base polymer is a polymer mixture having two or more different phases. For example, the base polymer may be a polymer mixture as illustrated in figure 5.

In the next step 206 the base polymer is extruded into a monofilament.

According to a preferred embodiment, several post-processing steps are performed on the extruded monofilament. For example, the monofilament is quenched, i.e., rapidly cooled down, e.g., by immersing the monofilament in cool water. Then, the monofilament can be reheated and the reheated monofilament can be stretched to form the monofilament into the artificial turf fiber. In case the base polymer is a multi-phase polymer mixture wherein the first polymer forms beads within the second polymer, the stretching step deforms the polymer beads into thread-like regions which provides additional rigidity to the fibers.

Next in step 208, the extruded monofilament is used as an artificial turf fiber. For example, the monofilament or a bundle of multiple monofilaments can be incorporated into a carrier to form an artificial turf. Additional steps may also be performed on the monofilament to form the artificial turf fiber. For instance, the monofilament may be spun or woven into a yarn with desired properties and the yarn could be incorporated into the carrier instead of the monofilament. The incorporation can be performed, for example, by tufting or weaving the artificial turf fiber into the artificial turf backing. Then in a further, optional step the incorporated artificial turf fibers may be fixed at a desired position in the carrier by adding a secondary backing at least onto one side of the carrier. For example, the secondary backing can be polyurethane or latex. A comparatively low concentration of the polyolefin grafted with the one or more siloxanes may ensure that the surface roughness of the fibers is still high enough to allow the secondary backing to firmly fix the fibers while at the same time provide and effective reduction in the friction coefficient of the turf.

Figure 3 is an illustration of a polyolefin grafted with one or more siloxanes 300. The grafting is a statistical process. Preferably, the polyolefin grafted with one or more siloxanes has multiple siloxanes 302 grafted to the polyolefin backbone 304.

Figure 4 is an illustration of a polymer mixture 400 comprising a polyolefin grafted with one or more siloxanes 404 and optionally a reflective agent 406 and other additives which are dispersed in the base polymer 400. The polyolefin grafted with siloxanes 404 may have been distributed in and mixed with the base polymer by a stirrer or screw. The base polymer comprises at least one polymer 402 such as polyethylene. The other additives may comprise a nucleating agent such as phthalocyanine green, or phthalocyanine blue, and/or UV stabilizers.

Figure 5 depicts a base polymer 500 which is a polymer mixture. The polymer mixture comprises a first polymer 502, e.g., a polar polymer such as polyamide, and a second polymer 506. The second polymer may be a non-polar polymer such as polyethylene. The polymer mixture may further comprise a compatibilizer 504. The first polymer and the second polymer are immiscible. In other examples there may be additional polymers such as a third, fourth, or even fifth polymer that are also immiscible with the second polymer. There also may be additional compatibilizers which are used either in combination with the first polymer or the additional third, fourth, or fifth polymer. The first polymer forms polymer beads surrounded by the compatibilizer. The polymer beads may also be formed by additional polymers (e.g., the third, fourth, ...., etc., polymer) which are not miscible in the second polymer and may be surrounded by the compatibilizer 504 or a different compatibilizer.

The polymer beads are surrounded by the compatibilizer and are within the second polymer or mixed into the second polymer. The base polymer 500 may also comprise other things such as additives to color or provide flame or UV-resistance or improve the flowing properties of the polymer mixture. In particular, the base polymer 500 comprises polyolefin grafted with one or more siloxanes 508.

Figure 6 is an illustration of the process of extruding a polymer mixture into a monofilament 606 which can be used as artificial turf fiber. Shown is an amount of a base polymer in the form of a polymer mixture 600. Within the polymer mixture 600 there is a large number of polymer beads 610. The polymer beads 610 may be made of one or more polymers that is not miscible with the second polymer 602 and is also separated from the second polymer 602 by a compatibilizer (not shown). A screw, piston or other device is used to force the polymer mixture 600 through a hole 603 in a plate 604. This causes the polymer mixture 600 to be extruded into a monofilament 606 and the polymer beads 610 to be stretched into thread-like regions 106. The second polymer 602 and the polymer beads 610 are extruded together. In some examples the second polymer 602 will be less viscous than the polymer beads 610 and the polymer beads 610 will tend to concentrate in the center of the monofilament 606. This may lead to desirable properties for the final artificial turf fiber as this may lead to a concentration of the thread-like regions 106 in the core region of the monofilament 606.

The polyolefin grafted with one or more siloxanes 608 is homogeneously dispersed in the base polymer 600 and may decrease the viscosity and adhesiveness of the base polymer. In examples where the base polymer comprises multiple immiscible polymers, the polyolefin grafted with one or more siloxanes may predominantly or solely be comprised in the one of the polymer having the highest share of the base polymer, e.g., the second polymer 602 into which the other, immiscible polymers are embedded as polymer beads 610. This may ensure that the polymer beads 610 do not fuse and separate into a polymer compartment at the extrusion nozzle which clogs the nozzle or generates shear forces which would tear the monofilament 606 apart. These shear forces could result from adhesion of the first polymer to the metal walls of the opening 603 in the plate 406 during the extrusion.

It should be noted that figure 6 does not represent the sizes of the polymer beads 610 and the polyolefin grafted with one or more siloxanes 608 to scale. According to examples, the additive is dispersed in the base polymer in a much more fine-grained manner, e.g., on the level of individual molecules or molecular aggregates, while the polymer bead in some examples will typically have a size of approximately 0.1 to 3 micrometer, preferably 1 to 2 micrometer in diameter. In other examples the polymer beads will be larger. They may for instance have a size with a diameter of a maximum of 50 micrometer.

In some embodiment the polymer beads comprise crystalline portions and amorphous portions. The polymer mixture is heated during the extrusion process and portions of the first polymer and also the second polymer may have a more amorphous structure or a more crystalline structure in various regions. Stretching the polymer beads into the thread-like regions may cause an increase in the size of the crystalline portions relative to the amorphous portions in the first polymer. This may lead for instance to the first polymer to become more rigid than when it has an amorphous structure. This may lead to an artificial turf with more rigidity and ability to spring back when pressed down. The stretching of the monofilament may also cause in some cases the second polymer or other additional polymers also to have a larger portion of their structure become more crystalline.

In a specific example of this the first polymer could be polyamide and the second polymer could be polyethylene. Stretching the polyamide will cause an increase in the crystalline regions making the polyamide stiffer. This is also true for other plastic polymers.

In another embodiment the step of providing a base polymer 600 comprises the step of creating of a polymer mixture used as the base polymer. The creation of the polymer mixture comprises forming a first mixture by mixing the first polymer with the compatibilizer. The creation of the polymer mixture further comprises the step of heating the first mixture. Then, a granulate is created by extruding the first mixture into a granulate. The creation of the polymer mixture further comprises the steps of mixing the first mixture with the second polymer. The creation of the polymer mixture further comprises the step of heating the granulated first mixture with the second polymer to form the polymer mixture. Then, e.g., during or after the heating, the polyolefin grafted with one or more siloxanes is added to the polymer mixture and mixed with the polymer mixture. For example, the adding the polyolefin grafted with one or more siloxanes to the polymer mixture may be performed in the extruder. This particular method of creating the polymer mixture may be advantageous because it enables very precise control over how the first polymer and the compatibilizer are distributed within the second polymer and enables a homogeneous mixing of the polyolefin grafted with one or more siloxanes into the resulting polymer mixture before it is extruded. For instance, the size or shape of the extruded first mixture may determine the size of the polymer beads in the polymer mixture.

In the aforementioned method of creating the polymer mixture for instance a so called one-screw extrusion method may be used. As an alternative to this the polymer mixture may also be created by putting all of the components that make it up together at once without an intermediate extrusion step. For instance, the first polymer, the second polymer and the compatibilizer and optionally also the polyolefin grafted with one or more siloxanes could be all added together at the same time, or subsequently, while the mixture is continuously agitated. Other ingredients such as additional polymers or other additives could also be put together at the same time and/or successively during constant agitation. However, it is also possible to add the polyolefin grafted with one or more siloxanes later, e.g., after having transferred the polymer mixture into the extruder. The amount of mixing of the polymer mixture could then be increased for instance by using a two-screw feed for the extrusion. In this case the desired distribution of the polymer beads can be achieved by using the proper rate or amount of mixing.

In some example implementations, the polymer mixture is at least a four-phase system. The polymer mixture comprises at least a third polymer. The third polymer is immiscible with the second polymer. The third polymer further forms the polymer beads surrounded by the compatibilizer within the second polymer. In some examples, the creating of the polymer mixture comprises the step of forming a first mixture by mixing the first polymer and the third polymer with the compatibilizer. The creating of the polymer mixture further comprises the step of heating the first mixture. The creating of the polymer mixture first comprises the step of extruding the first mixture. The creating of the polymer mixture further comprises the step of granulating the extruded first mixture. The creating of the polymer mixture further comprises mixing the first mixture with the second polymer. The creating of the polymer mixture further comprises the step of heating the first mixture with the second polymer to form the polymer mixture, and homogeneously mixing the polyolefin grafted with the siloxanes into the polymer mixture. This method may provide for a precise means of making the polymer mixture and controlling the size and distribution of the polymer beads using two different polymers. As an alternative the first polymer could be used to make a granulate with the compatibilizer separately from making the third polymer with the same or a different compatibilizer. The granulates could then be mixed with the second polymer to make the polymer mixture.

As an alternative to this, the polymer mixture could be made by adding the first polymer, a second polymer, the third polymer and the compatibilizer and optionally also the polyolefin grafted with the siloxanes all together at the same time and then mixing them more vigorously. For instance, a two-screw feed could be used for the extruder. According to some examples, the polyolefin grafted with the siloxanes are added later, e.g., are added to the polymer mixture having already been transferred into the extruder.

According to some examples, the third polymer is a polar polymer, e.g., polyamide. In some examples, the third polymer is polyethylene terephthalate, which is also commonly abbreviated as PET. In some examples, the third polymer is polybutylene terephthalate, which is also commonly abbreviated as PBT.

According to some examples, the polymer mixture comprises between 1% and 30% by weight the first polymer and the third polymer combined. In this example the balance of the weight may be made up by such components as the second polymer, the compatibilizer, and any other additional additives put into the polymer mixture. According to some examples, the thread-like regions have a diameter of less than 20 micrometer. According to some examples, the thread-like regions have a diameter of less than 10 micrometers. According to some examples the thread-like regions have a diameter of between 1 and 3 micrometers.

According to some examples the artificial turf fiber extends a predetermined length beyond the artificial turf backing. The thread-like regions have a length less than one half of the predetermined length. According to some examples the thread-like regions have a length of less than 2 mm.

According to some examples the polymer mixture comprises between 1 and 20% by weight of the first polymer and the third polymer combined. Again, in this example the balance of the weight of the polymer mixture may be made up by the second polymer, the compatibilizer, and any other additional additives.

According to some examples the polymer mixture comprises between 5% and 10% by weight of the first polymer and the third polymer combined. Again, in this example the balance of the weight of the polymer mixture may be made up by the second polymer, the compatibilizer, and any other additional additives.

According to some examples the polymer mixture comprises between 1% and 30% by weight the first polymer. In this example the balance of the weight may be made up for example by the second polymer, the compatibilizer, and any other additional additives.

According to some examples the polymer mixture comprises between 1% and 20% by weight of the first polymer. In this example the balance of the weight may be made up by the second polymer, the compatibilizer, and any other additional additives mixed into the polymer mixture.

According to some examples the polymer mixture comprises between 5% and 10% by weight of the first polymer. This example may have the balance of the weight made up by the second polymer, the compatibilizer, and any other additional additives mixed into the polymer mixture.

According to some examples the first polymer is polyamide or polyethylene terephthalate (PET) or polybutylene terephthalate (PBT).

According to some examples the second polymer is a non-polar polymer, e.g., polyethylene or polypropylene or a mixture of the aforementioned polymers. According to some examples the polymer mixture comprises between 80-90% by weight of the second polymer. In this example the balance of the weight may be made up by the first polymer, possibly the second polymer if it is present in the polymer mixture, the compatibilizer, and any other chemicals or additives added to the polymer mixture.

According to some examples the polymer mixture further comprises any one of the following: a wax, a dulling agent, an ultraviolet stabilizer, a flame retardant, an antioxidant, a pigment, and combinations thereof. These listed additional components may be added to the polymer mixture to give the artificial turf fibers other desired properties such as being flame retardant, having a green color so that the artificial turf more closely resembles grass and greater stability in sunlight.

Artificial turf comprising fibers made of one or more monofilaments comprising the above-mentioned thread-like regions may have the advantage of being extremely durable because the thread-like regions are embedded within the second polymer via a compatibilizer. They therefore do not have the ability to delaminate. Having the second polymer surrounding the first polymer may provide for a stiff artificial turf that is soft and feels similar to real turf. The artificial turf comprising these thread-like regions is distinct from artificial turf which is coextruded. In coextrusion a core of typically 50 to 60 micrometers may be surrounded by an outer cover or sheathing material which has a diameter of approximately 200 to 300 micrometers in diameter. In this artificial turf there is a large number of thread-like regions of the first polymer. The thread-like regions may not continue along the entire length of the monofilament. The artificial turf may also have properties or features which are provided for by any of the aforementioned method steps. Nevertheless, a combination of coextrusion and thread-like regions is possible, as is depicted in figure 1B.

Figures 7A and 7B show how a plurality of artificial turf fibers can be arranged in a carrier 704, e.g., a textile plane, by means of tufting. Tufting is a type of textile weaving in which an artificial turf fiber 701 (that may be a monofilament 506 or a bundle of multiple monofilaments) is inserted on a carrier 704. After the inserting is done, as depicted in Figure 7A, short U-shaped loops of the fiber point outside of the carrier's surface. Then, one or more blades cut 602 through the loops. As a result of the cutting step, two artificial turf fiber ends per loop and monofilament point out from the carrier and a grass-like artificial turf surface is generated.

Thereby, first parts 706 of the monofilaments of the artificial turf fibers having been inserted in the carrier 704 are exposed to a bottom side of the carrier and second parts 702 of said monofilaments are exposed to a top side of the carrier.

Figure 8 depicts the carrier 704 with the inserted filaments having been embedded within (Fig. 8A) or next to a surface of (Fig. 8B) an artificial turf backing 802. This is performed by adding a fluid in step 116 (see Fig. 1) on the carrier 704 such that the first parts 706 of the monofilaments become embedded in the fluid (Fig. 8A) or the first parts and some portions 804 of the second parts 702 of the monofilaments (Fig. 8B) become embedded in the fluid. The carrier may be a textile mesh or may comprise perforations that allow the fluid 802.2 at the bottom side of the carrier to flow to the upper side of the carrier and vice versa, thereby creating a portion 802.1 of the backing on top of the carrier. Thus, the carrier and parts of the fibers inserted in the carrier may become embedded in the backing 802. The artificial turf fibers 701 are shown as extending a distance 806 above the carrier 704. The distance 806 is essentially the height of the pile of the artificial turf fibers 701.

For example, the fluid may be a styrene-butadiene suspension that solidifies into a latex backing or, preferably, may be a mixture of polyols and polyisocyanates that solidifies into a polyurethane backing or any other kind of fluid that is capable of solidifying after a defined time period into a solid film. The fluid solidifies into a film 802, e.g., by a drying process or by a chemical reaction resulting in a solidification of the fluid. Such a chemical reaction can be, for example, a polymerization. The film surrounds and thereby mechanically fixes at least the first parts of the monofilaments of the arranged artificial turf fibers. The solid film acts as the artificial turf backing. In some examples, additional coating layers may be added on the bottom of the artificial turf backing.

According to some examples the integration of the artificial turf fibers in the carrier comprises weaving, bundling, or spinning multiple monofilaments together to create the artificial turf fiber. The incorporation of the artificial turf fiber into the artificial turf backing could for example be performed alternatively by weaving the artificial turf fiber into artificial turf backing (or fiber mat) during manufacture of the artificial turf carpet. This technique of manufacturing artificial turf is known from United States patent application US 20120125474 A1.

According to some examples the artificial turf fiber is not a single monofilament but a combination of a number of fibers. According to some examples the artificial turf fiber is a yarn formed by spinning or twisting together individual strands of fiber. According to some examples multiple stretched monofilaments are bundled together to create the artificial turf fiber. Multiple, for example 4 to 8 monofilaments, could be formed or finished into a yarn.

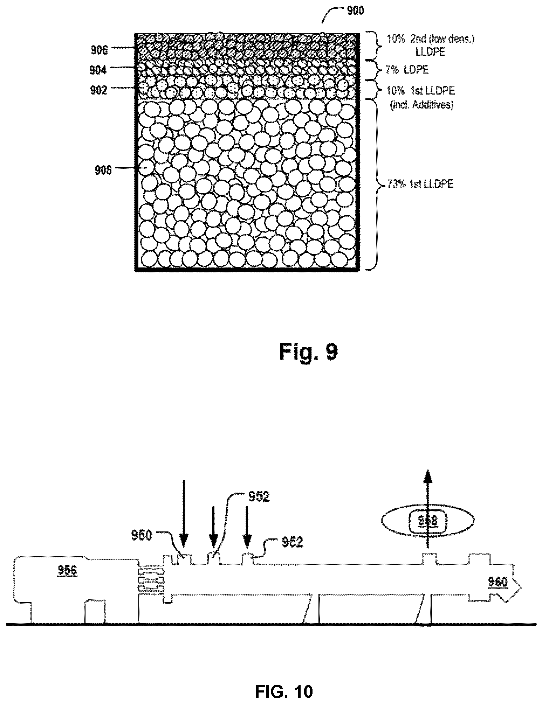

Figure 9 shows a cross-section of a granular polymer mixture 900 comprising LLDPE and HDPE according to one example implementation. The polymer mixture comprises the following components e.g., in the form of polymer granules that are molten later:
- a "pure" first LLDPE polymer 908 of a density of 0.919 g/cm3 and at an amount of 73% by weight of the polymer mixture. The first LLDPE polymer preferentially does not have any additives;
- a "master batch" 902 comprising the first LLDPE polymer having a density of 0.919 g/cm3 and at an amount of 10% by weight of the polymer mixture. The master batch may include additives;
- an LDPE polymer 904 of a density of 0.920 g/cm³and at an amount of 7% by weight of the polymer mixture; and
- a second, low density LLDPE polymer 906 of a density of 0.916 g/cm³ and at an amount of 10% by weight of the polymer mixture.

Depending on the embodiments, the amount of the filler material, the master batch, the LDPE and the first and second LLDPE polymer may vary. Preferentially, the amount of the first LLDPE polymer 902 lacking the additives is in this case adapted such that all components of the polymer mixture add up to 100%. In the depicted example, the LLDPE polymer in fraction 908 and in the master batch 902 and the additives contained in the master mix may constitute 83% by weight of the polymer mixture 900. In other embodiments (not shown), the polymer mixture 900 may comprise up to 39% filler material. In case the polymer mixture comprises 1% LDPE polymer and 99% LLDPE polymer (no filler or additives), an LDPE/LLDPE weight ratio of 1:99 is used. In case the polymer mixture comprises 15% LDPE polymer and 60% LLDPE polymer (a large amount of filler and additives may be used), an LDPE/LLDPE weight ratio of 15:60 is used. Preferentially, the LDPE/LLDPE weight ratio is between 5:95 and 8:60, i.e., between 5.3% and 13.3 %.

In the depicted example of Figure 9, 0.05 % by weight of the polymer mixture consists of the polyolefin grafted with the one or more siloxanes, preferably polyethylene grafted with the one or more siloxanes. The polyolefin grafted with the one or more siloxanes may for example be added in the master batch 902, but the present invention may not be limited in this way.

In some examples, the polymer components 902, 904, 906, 908 together form a first liquid phase (corresponding to the "second polymer") that may in addition comprise an additional polymer, also referred to as "first polymer" e.g., PA, that may form a separate phase that forms beads within the first phase. In this case, the amount of the first LLDPE may be reduced in accordance with the amount of the additional polymer.

Figure 10 shows a block diagram of a system for synthesizing maleic acid-grafted polyolefins (PO-g-MA). The PO-g-MA can then be used in further processing steps for synthesizing polyolefins grafted with one or more siloxanes (PO-g-Si). Shown is a twin screw extruder 956 comprising a die head 960. The extruder comprises a first opening 950 where a polyolefin (e.g., PP, PE, EVA (Ethylene-Vinylacetate-Copolymer), LLDPE, HDPE, LDPE etc.), a reactive monomer such as maleic acid anhydride (MA) having the chemical formula C₄H₂O₃, and an initiator are fed into the extruder. The initiator may be, for example, a peroxide. In some embodiments, the extruder may comprise one or more separate openings 952 for adding the MA and the initiator separate from the polymer. The polyolefin is typically provided in the form of granulate or pellets. The reactive monomer may be provided e.g., as vinylic monomers such as maleic acid anhydride (MA). As an alternative to MA, glycidyl methacrylate (GMA) may also be used. A vacuum pump 958 is configured to transport the mixture of polymer, the reactive monomer and peroxide to the die head 960. The mixture of the polyolefin, the initiator and the reactive monomer are melt-extruded in order to generate a polyolefin grafted with MA (PO-g-MA). According to some examples, as a result of this synthesis step, 0.1 % to 0.5 % of the monomers of the polyolefin (e.g. ethylene monomers in case of a polyethylene) are functionalized with MA, thereby providing functionalized groups which allow to covalently link the siloxanes to the polyolefin backbone in a subsequent synthesis step. This process is also referred to as "reactive extrusion," as a free-radical initiator attaches functional groups to a polyolefin chain by attaching the reactive monomers to the polyolefin chain. For example, the PO-g-MA can be maleic anhydride-grafted polyolefins with weight fractions of acid anhydride based on the total molecule in the range of 0.01 - 10 wt%, in particular 0.15 - 10 wt%.

The PO backbone may be any of the described PO homopolymers, or copolymers described in this application. According to some examples, the PO in the PO-g-MA is HDPE, or LLDPE. In some examples, instead of PO the backbone may be PA, or mixtures of PO and PA.

In some embodiments, the PO in the PO-g-MA may be any of ULDPE, LDPE, LLDPE, HDPE, or mixtures thereof. In some embodiments, the PO In some embodiments, the PO is a mixture of LDPE and LLDPE, or a mixture of LLDPE and HDPE, wherein the amount of the LLDPE in the polymer mixture is greater than the amount of the LDPE or the amount of HDPE in the mixture. In some embodiments, the PO is a mixture of LDPE and LLDPE, wherein the LLDPE is preferably from 10 to 70 wt% of the polymer material, more preferably from 15 to 50 wt%, and even more preferably from 25 to 45 % of the total amount of LDPE and LLDPE. In some embodiments, the PO is a mixture of HDPE and LLDPE, wherein the HDPE has a density of 0.952 to 0.957 g/cm³ and is in an amount of 5.0 to 18 wt%, preferably 12 to 17 wt% of the total amount of HDPE and LLDPE.

In some embodiments the PO-g-MA may be PP-g-MA, or PP/PE-g-MA, wherein PP/PE refers to copolymers of polypropylene and polyethylene.

It is further noted that instead of a polyolefin (PO), another polymer material as any of the polymer materials described here may be added in the first opening 950, including for example, polyamides, polyesters, or mixtures thereof or any mixtures of polyamides, polyesters, and polyolefins. Preferably, a main part of the base polymer of these mixtures may be a polyolefin, and in particular, PP and/or PE, more in particular PE, and even more in particular ULDPE, LDPE, LLDPE, HDPE and mixtures thereof.

The MA content may be in the range of 0.5% to 2%, in particular about 1.0% by weight of the of the PO-g-MA molecule.

In a second synthesis step (not shown), the PO-g-MA is stirred in a batch reactor at 180°C with hydroxy-functionalized siloxane to generate the polyolefins (PO) grafted with one or more siloxanes (PO-g-Si). For example, a PO-g-Si may be synthesized by reacting an anhydride group-containing polyolefin in a solvent with a hydroxyfunctional, linear, organically modified siloxane. For example, the siloxanes can be polyester-modified siloxanes, for example α,ω-dihydroxypolyestersiloxanes. The reaction is commenced under vigorous stirring and elevated temperatures of 165-195° C. One or more organo-polysiloxanes can thereby be attached to a polyolefin backbone via ester linkages. Condensation between hydroxyl and anhydride groups results in a permanent chemical bond of the siloxane chains to the polymer matrix.

As an alternative to the solvent-based approach, PO-g-Si can also be prepared, for example, under the action of shear forces, for example during incorporation into the polymer on an extruder. Instead of a hydroxy-functionalized siloxane, other types of chemically equivalent siloxanes may be used, e.g., amino-functionalized siloxanes.

The polyamides grafted with siloxanes may be synthesized analogously using e.g., anhydride group-containing polyamines.

According to some implementation variants, the polyolefin grafted siloxanes are synthesized as specified in the European patent application EP1211277 B1 which is included herein by reference in its entirety.

According to some embodiments, the molecular weights specified herein can be determined e.g., by measuring the melt flow rate in accordance with standard ASTM D1238 or ISO 1133.

According to embodiments, the polymer in the polymer grafted with one or more siloxanes is a non-polar polyolefin such as polyethylene. This may be beneficial as this may cause the polymer grafted with the one or more siloxanes to be basically apolar (non-polar), which may ease the integration in a largely non-polar base polymer matrix of the fiber, e.g., PE-based fibers. Currently, there are siloxane graft polymers commercially available which have an A-B block format, whereby the A block is a silicone, e.g., PDMS, and the B block is either a polyamide or a polyacrylate. The A:B ratio of these siloxane block polymers may be 1:1, for example. Both B-block variants are polar blocks and yield polar polymers, because the dipole moments between C and N or O atoms in the polyamide or polyacrylate blocks are very large. The A block (e.g., PDMS) is also polar. Hence, these polar graft polymers are less suited for use in a non-polar fiber base polymer, as the polar and non-polar polymers may not be miscible and may yield artificial turf fibers having a tendency to delaminate.

In some embodiments, the one or more siloxanes may include a modified siloxane that contains amide based or acrylic-based hydrophobic groups. The aforementioned functional groups may introduce hydrophobicity to the one or more siloxanes. The modified siloxane may be prepared and then grafted on the backbone (e.g., the polyolefin backbone) as described above. Preparing the modified siloxane may be done by any suitable method. For example, an aminopropyl-terminated siloxane compound may be used to introduce amine groups into the one or more siloxanes followed by reaction with a carboxylic acid to form the amide groups.

Suitable examples of modified siloxanes with acrylic-based functional groups may include (meth)acrylic-modified siloxane compounds modified at one end or both ends thereof with at least one (meth)acrylic group.

### Examples

In Example 1 an amount of 0.2 wt%, of a siloxane grafted polyethylene (SGPE or PE-g-Si) was added in a base polymer which was a mixture of 60 wt% LDPE and 40 wt% LLDPE. The LDPE had a density of 0.905 g/cm³. The LLDPE had a density of 0.918 g/cm³ and was a copolymer of polyethylene and butene. No reflective agent was added. The polyethylene backbone of the SGPE was made of the same type polymer as the base polymer and had a molecular weight of 2k Dalton. The siloxane was polydimethylsiloxane (PDMS) and had molecular weight of 1000 Dalton.

Additives such as color pigments, flame retardants were also added and the mixture was extruded in a conventional extrusion equipment to form an artificial turf fiber which was then added in an artificial turf structure having a polyurethane backing as described above with reference to the figures.

In examples 2-5 the same process was repeated with the key parameters shown in Table 1. For each of the examples 2-5, the polymer backbone of the SGPE was the same type polymer as the base polymer. In examples, 4-5 the fiber was texturized to have a top at least about 30 % of its length which extends above the backing and any infill material in the shape of a wave. Compared to example 1 which comprised straight fibers, the turf made with the texturized fibers of examples 2 and 5 showed significant improvement in overall smoothness and coverage. The same process was repeated in total 5 times with the key compounds added each time shown in the Table 1 below.

**Table 1**

| | Ex. 1 | EX. 2 | Ex. 3 | Ex. 4 | Ex. 5 |
|---|---|---|---|---|---|
| Polymer 1 | LDPE | LLDPE | HDPE | LLDPE | LLDPE |
| Polymer 1 density | 0.905 | 0.918 | 0.94 | 0.918 | 0.918 |
| Polymer 1 WT% | 60 | 20 | 100 | 70 | 30 |
| Polymer 2 | LLDPE | LLDPE | -- | HDPE | HDPE |
| Polymer 2 density | 0.920 | 0.920 | -- | 0.94 | 0.94 |
| Polymer 2 Wt% | 40 | 80 | -- | 30 | 70 |
| traction control agent (TCA) | SGPE | SGPE | SGPE | SGPE | SGPE |
| TCA amount wt% | 0.2 | 0.01 | 0.1 | 0.15 | 0.25 |
| Siloxane type | PDMS | PDMS | PDMS | PDMS | PDMS |
| Siloxane MW (Dalton) | 1000 | 1000 | 1000 | 1000 | 1000 |
| Backbone polymer MW (Dalton) | 2000 | 5000 | 5000 | 10000 | 30000 |
| Reflective Agent | NO | Titanium dioxide | Titanium dioxide | Mixed metal oxide | Mixed metal oxide |
| Reflective agent amount wt% | | 1.0 | 1.0 | 1.0 | 1.0 |
| Fiber texturization | NO | NO | NO | Yes, type waves 30% | Yes, type waves 30% |

The above formed fibers in examples 1-5 were tested and compared with comparative examples 6-10. In comparative examples 6-10 the same fiber compositions as in examples 1-5 were used respectively, except that no traction control agent was used in the polymer mixtures as shown in Table 2.

**Table 2**

| | C.E. 6 | C.E. 7 | C.E. 8 | C.E. 9 | C.E. 10 |
|---|---|---|---|---|---|
| Polymer 1 | LDPE | LLDPE | HDPE | LLDPE | LLDPE |
| Polymer 1 density | 0.905 | 0.918 | 0.94 | 0.918 | 0.918 |
| Polymer 1 WT% | 60 | 20 | 100 | 70 | 30 |
| Polymer 2 | LLDPE | LLDPE | -- | HDPE | HDPE |
| Polymer 2 density | 0.920 | 0.920 | -- | 0.94 | 0.94 |
| Polymer 2 Wt% | 40 | 80 | -- | 30 | 70 |
| traction control agent (TCA) | NO | NO | NO | NO | NO |
| Reflective Agent | NO | Titanium dioxide | Titanium dioxide | Mixed metal oxide | Mixed metal oxide |
| Reflective agent amount wt% | | 1.0 | 1.0 | 1.0 | 1.0 |
| Fiber texturization | NO | NO | NO | Yes, type waves 30% | Yes, type waves 30% |

Significant improvement in the overall smoothness and tribological characteristics was observed between the examples 1-5 and their corresponding comparative examples 6-10. A significant reduction in the friction coefficient was observed in the examples 1-5 compared to their corresponding comparative examples 6-10 of at least 10%. In addition, it has been found, rather unexpectedly, that the above formed fibers with the SGPE prevent excessive slippage in rain/wet conditions while providing a sufficiently smooth surface in dry/sunny conditions. Thus, not only the need for watering the artificial turf is eliminated but also excessive slippage is prevented even in rain/wet conditions. Surprisingly slippage is not or not substantially increased with respect to dry conditions when the artificial turf becomes wet such as due to rainy weather, possibly because the SGPE also acts as a water repellant.

In example 11, LLDPE and HDPE together with an effective amount of a SGPE were used according to the following composition:
Base polymer:
LLDPE-C6 : 81,75 wt%;
HDPE: 10 wt%;
masterbatch 8 wt%,
calcium stearate as process aid 0.25 wt%, and
SGPE in an amount of from 0.01 wt% to 0.25 wt%.

The LLDPE-C6 was 85 wt% biobased, and the HDPE was 90 wt% biobased. The LLDPE-C6 had a density of 0.925 g/cm³. The HDPE had a density of 0.97 g/10 min. The density was measured by ASTM D4883-18 standard test method for measuring the density of polyethylene using ultrasound.

The SGPE had a backbone polymer of the same type as the base polymer grafted with the same siloxane as the one used in example 1.

In examples 12-16, the same formulation as in example 11 was used except that the SGPE was varied using 0.30 wt% in example 12, 0.35 wt% in example 13, 0.40 wt% in example 14, 0.45 wt% in example 15, and 0.5 wt% in example 16. The amount of the masterbatch was respectively adjusted. The SGPE was mixed in the masterbatch and added in the polymer together as part of the masterbatch.

The bio-based polyethylene materials were made from ethylene derived from bioethanol based on sugar cane and are fully recyclable. The biobased materials had some impurities and calcium stearate which was added by the manufacturer of the material as a process aid. The biobased LLDPE and HDPE are therefore chemically different from petrol-based LLDPE and HDPE, respectively.

The master batch was 50% color pigments with a polyethylene based carrier and 50% UV stabilizer comprising 1, 6 Hexane-diamine, octadecyl-3-(3,5-di-tert.butyl-4-hydroxyphenyl)-propionate, and pentaerythritol tetrakis(3-(3,5-di-ter-butyl-4-hydroxyphenyl)propionate).

Comparative example 17 used same composition as for example 11 except that no SGPE was used. Significant improvement in the overall smoothness and tribological characteristics was observed between the examples 11-16 and comparative example 17. A significant reduction in the friction coefficient was observed in the examples 11-16 compared to the comparative example 10 of at least 10% for an extended period of time. In addition, the above formed fibers with the SGPE in the above amounts prevent excessive slippage in rain/wet conditions while providing a sufficiently smooth surface in dry/sunny conditions. Thus, not only the need for watering the artificial turf is eliminated but also excessive slippage is prevented even in rain/wet conditions. Surprisingly slippage is not or not substantially increased with respect to dry conditions when the artificial turf becomes wet such as due to rainy weather.

In comparative examples 18, 19, and 20 the same base polymer compositions were used as in examples 1, 2, and 3, but instead of SGPE, free siloxanes were used in the same amount. Unlike the grafted siloxane the free siloxanes may migrate to the surface of the fiber and out of the fiber in a period of few months.

Although the invention has been described in reference to specific embodiments, it should be understood that the invention is not limited to these examples only and that many variations of these embodiments may be readily envisioned by the skilled person after having read the present disclosure which do not fall outside the scope of the invention as defined by the claims.

### List of reference numerals

100 artificial turf fiber
102 circular or ellipsoid cross section fiber profile
103 core
104 protrusion
106 thread-like region
110 cladding
112 undulated side
114 core-cladding-contact surface
115 bulge
116 straight side
118 concave side
120 artificial turf fiber
130 artificial turf fiber, cross section
140 cross section of artificial turf fiber
202-208 steps
300 polyolefin grafted with siloxanes
302 siloxane
304 polyolefin backbone polymer
400 polymer mixture or base polymer
402 base polymer
404 polyolefin grafted with one or more siloxanes
406 further additives
408 polymer bead
500 polymer mixture, base polymer
502 first polymer
504 compatibilizer
506 second polymer or main part of the base polymer
508 polyolefin grafted with one or more siloxanes
600 polymer mixture or base polymer
602 second polymer or main part of the base polymer
603 hole
604 plate
606 monofilament
608 polyolefin grafted with one or more siloxanes
610 first polymer (beads)
700 artificial turf
702 fiber height
704 carrier
706 tuft loops on lower side of carrier
708 knife cutting fiber loops on upper side of carrier
802 area with predominantly amorphous state
804 area of increased shear forces in polymer mixture
806 area of high shear forces
808 crystalline portions
810 opening of the nozzle
900 polymer mixture
902 master batch LLDPE fraction
904 LDPE polymer fraction
906 second LLDPE polymer fraction
908 (first/main) LLDPE fraction
956 twin screw extruder
958 vacuum pump
960 die head

## Claims

1. An artificial turf fiber for a soccer or rugby artificial turf, the fiber comprising:
a base polymer (400, 500, 600), and
a traction control agent (404) incorporated/contained in the base polymer (402),
wherein the traction control agent (404) is a grafted polymer (404) comprising a slip agent (302) grafted on a backbone (304) of the grafted polymer (404).

2. The artificial turf fiber of claim 1,
wherein the traction control agent (404) is incorporated in the base polymer (402) in an amount effective to reduce the friction coefficient of the artificial turf fiber by at least 5%, preferably from 5 % to 50%, more preferably from 7% to 35 % compared to the friction coefficient of the artificial turf fiber without the traction control agent.

3. The artificial turf fiber of claims 1 or 2,
wherein the base polymer (400, 500, 600) comprises polyolefin, polyester or a polyamide or a combination thereof, preferably at least one of a polyethylene, polypropylene, nylon 6, polyethylene terephthalate (PET), and polybutylene terephthalate (PBT), and more preferably at least one of polyolefin homopolymers, polyolefin random copolymers, preferably polyethylene including low density polyethylene (LDPE), linear low-density polyethylene (LLDPE), ultra-low density polyethylene (ULDPE), and/or high-density polyethylene (HDPE) and mixtures thereof, and
wherein the backbone (304) of the traction control agent (404) is made of the same type polymer as the base polymer or a main part of the base polymer, wherein the main part of the base polymer is a polymer making up at least 50%, in particular at least 60%, in particular at least 70% by weight of the base polymer.

4. The artificial turf fiber of any of the preceding claims,
wherein the backbone (304) of the grafted polymer (404) is selected from the group consisting of polyolefins, polyesters, and polyamides, preferably polyolefins or polyamides, and more preferably a polyolefin, and
wherein the slip agent grafted on the backbone of the grafted polymer is one or more siloxanes.

5. The artificial turf fiber of any of the preceding claims,
wherein the traction control agent stays dispersed homogeneously within the base polymer for at least one year, preferably for at least 2 years, more preferably for at least 5 years, and most preferably for at least 10 years.

6. The artificial turf fiber of any of the preceding claims,
wherein the base polymer (400, 500, 600) is selected from a group consisting of polyolefins, polyesters, and polyamides,
wherein a main part of the base polymer of at least 50%, in particular of at least 60%, in particular of at least 70% by weight of the base polymer consists of a polyolefin or polyamide and
wherein the backbone of the grafted polymer is made of the same polymer type as the main part of the base polymer.

7. The artificial turf fiber of any of the preceding claims, wherein the base polymer is ULDPE, LDPE, LLDPE, HDPE, or mixtures thereof.

8. The artificial turf of any of the claims 1 to 7,
wherein the base polymer is a mixture of LDPE and LLDPE, or a mixture of LLDPE and HDPE with the amount of LLDPE in the polymer mixture being greater than the amount of the LDPE or the amount of HDPE in the mixture, or
wherein the base polymer is a mixture of LDPE and LLDPE, the LLDPE is preferably from 10 to 70 wt% of the polymer material, more preferably from 15 to 50% wt%, and even more preferably from 25 to 45 % of the total amount of LDPE and LLDPE, or
wherein the base polymer is a mixture of HDPE and LLDPE, the HDPE has a density of 0.952 to 0.957 g/cm³ and is in an amount of 5.0 to 18 wt%, preferably 12 to 17 wt% of the total amount of HDPE and LLDPE.

9. The artificial turf fiber of any one of the previous claims, wherein at least 0.01 % by weight of the artificial turf fiber, and in particular 0.01 % to 0.25 % by weight of the artificial turf fiber, in particular 0.01 % to 0.09 % by weight of the artificial turf fiber, in particular 0.01 % to 0.08 % by weight of the artificial turf fiber, in particular 0.01 % to 0.07 % by weight of the artificial turf fiber, in particular 0.01 % to 0.06 % by weight of the artificial turf fiber, in particular 0.01 % to 0.05 % by weight of the artificial turf fiber, and in particular 0.02-0.03 % by weight of the artificial turf fiber, consists of the grafted polyolefin grafted with the one or more siloxanes.

10. The artificial turf fiber of any one of the previous claims,
wherein the grafted polymer is polyolefin grafted with one or more siloxanes and
wherein the molecular weight of the polyolefin grafted with the one or more siloxanes is at least 2,000 Dalton, or at least 100,000 Dalton, or at least 500,000 Dalton, or at last 2,000 Dalton but less than 1,000,000 Dalton, or at least 100,000 Dalton and less than 1,000,000 Dalton, or at least 500,000 Dalton and less than 1,000,000 Dalton.

11. The artificial turf fiber of any of the claims 1-6, wherein the polymer material comprises:
LLDPE-C6: 80 - 84 wt%, in particular 81.75 wt%, with at least 85 wt% of the LLDPE-C6 being biobased,
HDPE: 8.0 -12.0 wt%, in particular 10.0 wt%, with at least 90 wt% of the HDPE being biobased,
masterbatch 6 -10 wt%, in particular 8 wt%,
process aid 0.1 - 0.5 wt%, in particular 0.25 wt%, and
the traction control agent is a siloxane grafted polyolefin (404), and is present in an amount of from 0.01 wt% to 0.25 wt%, preferably in an amount of from 0.01 wt% to 0.2 wt%, and
wherein the masterbatch includes color pigments and a UV stabilizer.

12. The artificial turf fiber of any one of the previous claims, wherein the grafted polymer is a polyolefin grafted with one or more siloxanes, and the amount of the one or more siloxanes grafted on the polyolefin is chosen so that the one or more siloxanes are solid or have a wax-consistency at room temperature.

13. The artificial turf fiber of any one of the previous claims,
wherein the base polymer (400, 500, 600) comprises a first polymer (402, 610), a second polymer (404, 602), and a compatibilizer (406),
wherein the first polymer and the second polymer are immiscible, and
wherein the first polymer forms threadlike regions (106) surrounded by the compatibilizer within the second polymer.

14. The artificial turf fiber of any of the previous claims, further comprising reflective particles and or reflective pigments for preventing overheating of the fiber, and wherein the fiber is texturized with at least 30% of the part of the fiber length which extends above the infill material having at least one of curl, or wave shape for enhanced softness and coverage.

15. An artificial turf comprising a plurality of the artificial turf fibers of any of the previous claims securely attached to a backing material,
wherein the plurality of artificial turf fibers form closed loops extending above a top surface of the backing,
wherein preferably the fibers are texturized fibers, and wherein the density of the fibers is at least 60%, more preferentially at least 70% of the area covered by the artificial turf, and/or
wherein the backing includes a biocide agent which is a zinc-based antimicrobial agent or a metal coordination complex with pyrithione, preferably pyrithione zinc.

16. The use of the artificial turf of claim 15 in a soccer field according to the FIFA standard for reducing ankle injuries.

17. A soccer field playing surface for reducing ankle injuries, the soccer field comprising the artificial turf of claim 15 according to the FIFA standard for reducing ankle injuries.

## Amended claims

### Amended claims in accordance with Rule 137(2) EPC.

1. An artificial turf fiber for a soccer or rugby artificial turf, the fiber comprising:
a base polymer (400, 500, 600), and
a traction control agent (404) incorporated/contained in the base polymer (402),
wherein the traction control agent (404) is a grafted polymer (404) comprising a slip agent (302) grafted on a backbone (304) of the grafted polymer (404),
wherein the backbone (304) of the traction control agent (404) is made of the same type polymer as the base polymer or a main part of the base polymer, and
wherein the main part of the base polymer is a polymer making up at least 50%, in particular at least 60%, in particular at least 70% by weight of the base polymer.

2. The artificial turf fiber of claim 1,
wherein the traction control agent (404) is incorporated in the base polymer (402) in an amount effective to reduce the friction coefficient of the artificial turf fiber by at least 5%, preferably from 5 % to 50%, more preferably from 7% to 35 % compared to the friction coefficient of the artificial turf fiber without the traction control agent.

3. The artificial turf fiber of claims 1 or 2,
wherein the base polymer (400, 500, 600) comprises polyolefin, polyester or a polyamide or a combination thereof, preferably at least one of a polyethylene, polypropylene, nylon 6, polyethylene terephthalate (PET), and polybutylene terephthalate (PBT), and more preferably at least one of polyolefin homopolymers, polyolefin random copolymers, preferably polyethylene including low density polyethylene (LDPE), linear low-density polyethylene (LLDPE), ultra-low density polyethylene (ULDPE), and/or high-density polyethylene (HDPE) and mixtures thereof,.

4. The artificial turf fiber of any of the preceding claims,
wherein the backbone (304) of the grafted polymer (404) is selected from the group consisting of polyolefins, polyesters, and polyamides, preferably polyolefins or polyamides, and more preferably a polyolefin, and
wherein the slip agent grafted on the backbone of the grafted polymer is one or more siloxanes.

5. The artificial turf fiber of any of the preceding claims,
wherein the traction control agent stays dispersed homogeneously within the base polymer for at least one year, preferably for at least 2 years, more preferably for at least 5 years, and most preferably for at least 10 years.

6. The artificial turf fiber of any of the preceding claims,
wherein the base polymer (400, 500, 600) is selected from a group consisting of polyolefins, polyesters, and polyamides,
wherein a main part of the base polymer of at least 50%, in particular of at least 60%, in particular of at least 70% by weight of the base polymer consists of a polyolefin or polyamide and
wherein the backbone of the grafted polymer is made of the same polymer type as the main part of the base polymer.

7. The artificial turf fiber of any of the preceding claims, wherein the base polymer is ULDPE, LDPE, LLDPE, HDPE, or mixtures thereof.

8. The artificial turf of any of the claims 1 to 7,
wherein the base polymer is a mixture of LDPE and LLDPE, or a mixture of LLDPE and HDPE with the amount of LLDPE in the polymer mixture being greater than the amount of the LDPE or the amount of HDPE in the mixture, or
wherein the base polymer is a mixture of LDPE and LLDPE,
the LLDPE is preferably from 10 to 70 wt% of the polymer material, more preferably from 15 to 50% wt%, and even more preferably from 25 to 45 % of the total amount of LDPE and LLDPE, or
wherein the base polymer is a mixture of HDPE and LLDPE,
the HDPE has a density of 0.952 to 0.957 g/cm³ and is in an amount of 5.0 to 18 wt%, preferably 12 to 17 wt% of the total amount of HDPE and LLDPE.

9. The artificial turf fiber of any one of the previous claims, wherein at least 0.01 % by weight of the artificial turf fiber, and in particular 0.01 % to 0.25 % by weight of the artificial turf fiber, in particular 0.01 % to 0.09 % by weight of the artificial turf fiber, in particular 0.01 % to 0.08 % by weight of the artificial turf fiber, in particular 0.01 % to 0.07 % by weight of the artificial turf fiber, in particular 0.01 % to 0.06 % by weight of the artificial turf fiber, in particular 0.01 % to 0.05 % by weight of the artificial turf fiber, and in particular 0.02-0.03 % by weight of the artificial turf fiber, consists of the grafted polyolefin grafted with the one or more siloxanes.

10. The artificial turf fiber of any one of the previous claims,
wherein the grafted polymer is polyolefin grafted with one or more siloxanes and
wherein the molecular weight of the polyolefin grafted with the one or more siloxanes is at least 2,000 Dalton, or at least 100,000 Dalton, or at least 500,000 Dalton, or at last 2,000 Dalton but less than 1,000,000 Dalton, or at least 100,000 Dalton and less than 1,000,000 Dalton, or at least 500,000 Dalton and less than 1,000,000 Dalton, and
wherein the molecular weight is determined using exclusion chromatography with an evaporative light scattering detector.

11. The artificial turf fiber of any of the claims 1-6, wherein the polymer material comprises:
LLDPE-C6: 80 - 84 wt%, in particular 81.75 wt%, with at least 85 wt% of the LLDPE-C6 being biobased,
HDPE: 8.0 - 12.0 wt%, in particular 10.0 wt%, with at least 90 wt% of the HDPE being biobased,
masterbatch 6 -10 wt%, in particular 8 wt%,
process aid 0.1 - 0.5 wt%, in particular 0.25 wt%, and
the traction control agent is a siloxane grafted polyolefin (404), and is present in an amount of from 0.01 wt% to 0.25 wt%, preferably in an amount of from 0.01 wt% to 0.2 wt%, and
wherein the masterbatch includes color pigments and a UV stabilizer.

12. The artificial turf fiber of any one of the previous claims, wherein the grafted polymer is a polyolefin grafted with one or more siloxanes, and the amount of the one or more siloxanes grafted on the polyolefin is chosen so that the one or more siloxanes are solid or have a wax-consistency at room temperature.

13. The artificial turf fiber of any one of the previous claims,
wherein the base polymer (400, 500, 600) comprises a first polymer (402, 610), a second polymer (404, 602), and a compatibilizer (406),
wherein the first polymer and the second polymer are immiscible, and wherein the first polymer forms threadlike regions (106) surrounded by the compatibilizer within the second polymer.

14. The artificial turf fiber of any of the previous claims, further comprising reflective particles and or reflective pigments for preventing overheating of the fiber, and wherein the fiber is texturized with at least 30% of the part of the fiber length which extends above the infill material having at least one of curl, or wave shape for enhanced softness and coverage.

15. An artificial turf comprising a plurality of the artificial turf fibers of any of the previous claims securely attached to a backing material,
wherein the plurality of artificial turf fibers form closed loops extending above a top surface of the backing,
wherein preferably the fibers are texturized fibers, and wherein the density of the fibers is at least 60%, more preferentially at least 70% of the area covered by the artificial turf, and/or
wherein the backing includes a biocide agent which is a zinc-based antimicrobial agent or a metal coordination complex with pyrithione, preferably pyrithione zinc.

16. The use of the artificial turf of claim 15 in a soccer field according to the FIFA standard for reducing ankle injuries.

17. A soccer field playing surface for reducing ankle injuries, the soccer field comprising the artificial turf of claim 15 according to the FIFA standard for reducing ankle injuries.
